# EUROPEAN PATENT SPECIFICATION

(11) **EP 4 091 812 B1**
(45) Date of publication and mention of the grant of the patent: **21.02.2024**
(21) Application number: 22174322.2
(22) Date of filing: 19.05.2022
(51) Int. Cl.: B32B 17/10, B32B 27/32, B60J 5/10, B60J 5/00

(54) **AUTOMOBILE DOOR AND METHOD FOR MANUFACTURING SAME**
FAHRZEUGTÜR UND VERFAHREN ZUM HERSTELLEN DERSELBEN
PORTE D'AUTOMOBILE ET SON PROCÉDÉ DE FABRICATION

(30) Priority: 20.05.2021 JP 2021085335
(43) Date of publication of application: 23.11.2022
(73) Proprietor: Resonac Corporation, Tokyo (JP)
(72) Inventor: Takahashi, Nobuyuki, Tokyo, 105-8518 (JP); Sato, Masahiro, Tokyo, 105-8518 (JP); Otani, Kazuo, Tokyo, 105-8518 (JP); Kuroki, Kunihiro, Tokyo, 105-8518 (JP)
(74) Representative: Strehl Schübel-Hopf & Partner

(56) References cited:
- WO-A1-2020/256038
- JP-A- 2019 065 139
- US-A1- 2005 238 814

## Description

### FIELD

The present disclosure relates to an automobile door, such as an openable back door provided at a rear part of a body of an automobile, and a method for manufacturing the same.

### BACKGROUND

A so-called "hatchback type" automobile is provided with an openable back door at its rear part. In this type of automobile, rear glass is attached so as to cover an open part of an outer panel of the back door. The rear glass can for example be disposed on the outer panel at the outside of the vehicle compartment or can be disposed between the outer panel and an inner panel of the back door (for example, see PTL 1).

### [CITATIONS LIST]

### [PATENT LITERATURE]

[PTL 1] Japanese Unexamined Patent Publication No. 2021-010086
JP2019065139A discloses a vehicle exterior part comprising a back door having an inner panel and an outer panel, and one or both of the inner panel and the outer panel being formed of the following resin composition: 5 to 70 parts by mass of cellulose and 100 parts by mass of a thermoplastic synthetic resin, and containing an organic peroxide, the thermoplastic synthetic resin comprising a graft modified polyolefin resin of unsaturated carboxylic acid or its anhydride. The back door is attached to the rear side of the vehicle so as to be openable and closable together with mechanical parts such as a backlight and a glass plate.

### SUMMARY

### [TECHNICAL PROBLEM]

Due to the demands for lighter weight in recent years, outer panels and inner panels are mostly being largely formed by resins. In view of such a circumstance, when a glass member (rear glass) and a resin member (outer panel, etc.) are joined to manufacture a back door like in the back door of PTL 1, the two members are preferably strongly joined so as to satisfy the strength requirements of the back door.

Note that, in an automobile, doors including a joined part of a glass member and a resin member are not limited to hatch type doors like a back door. These doors also include slide doors, gullwing doors, double doors, etc. In each of these as well, the two members are preferably strongly joined.

The present disclosure was made in consideration of the above technical background and has as its object the provision of an automobile door which is provided with a glass member and a resin member and which is high in joint strength of the two members and can be simply obtained and a method for manufacturing the same.

### [SOLUTION TO PROBLEM]

The present disclosure encompasses the following aspects:
[1] An automobile door comprising a glass member, a frame including a resin member joined with the glass member, and one or more resin coating layers disposed on at least one of the glass member and the resin member, wherein,
   the glass member is a window glass,
   the resin member includes at least one panel for fastening the window glass,
   the glass member and the resin member are joined through the one or more resin coating layers,
   among the one or more resin coating layers, a layer contiguous with the glass member is a modified polyolefin layer formed from a resin composition including a polyolefin, the modified polyolefin layer being at least one type selected from the group consisting of a layer including a reaction product 1 of a maleic anhydride-modified polyolefin, a bifunctional epoxy resin, and a bifunctional phenol compound, a layer including a reaction product 2 of a maleic anhydride-modified polyolefin and a thermoplastic epoxy resin, and a layer including a mixture of a polyolefin and a thermoplastic epoxy resin.
[2] The automobile door according to [1], wherein the reaction product 1 is obtained by a polyaddition reaction of a bifunctional epoxy resin and a bifunctional phenol compound in a solution containing a maleic anhydride-modified polyolefin.
[3] The automobile door according to [1], wherein the reaction product 2 is obtained by a reaction of a thermoplastic epoxy resin produced by a polyaddition reaction of a bifunctional epoxy resin and a bifunctional phenol compound, and a maleic anhydride-modified polyolefin.
[4] The automobile door according to [1], wherein the mixture is a mixture of polypropylene and a thermoplastic epoxy resin.
[5] The automobile door according to any one of [1] to [4], wherein the one or more resin coating layers are a plurality of layers including the modified polyolefin layer and at least one layer other than the modified polyolefin layer, at least one layer of the layers other than the modified polyolefin layer being at least one type selected from the group consisting of a thermoplastic epoxy resin layer formed from a resin composition including a thermoplastic epoxy resin and a curable resin layer formed from a resin composition including a curable resin.
[6] The automobile door according to [5], wherein the curable resin is at least one resin selected from the group consisting of a urethane resin, an epoxy resin, a vinyl ester resin, and an unsaturated polyester resin.
[7] The automobile door according to any one of [1] to [6], wherein the automobile door has, between the glass member and the one or more resin coating layers, a functional-group containing layer disposed contiguous with the glass member and the one or more resin coating layers,
   the functional-group containing layer containing at least one functional group selected from the group consisting of the following (1) to (7):
   (1) at least one functional group derived from a silane coupling agent and selected from the group consisting of an epoxy group, an amino group, a (meth)acryloyl group, and a mercapto group,
   (2) a functional group produced by a reaction of at least one compound selected from the group consisting of an epoxy compound and a thiol compound with an amino group derived from a silane coupling agent,
   (3) a functional group produced by a reaction of at least one compound selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
   (4) a functional group produced by a reaction of a thiol compound with a (meth)acryloyl group derived from a silane coupling agent,
   (5) a functional group produced by a reaction of at least one compound selected from the group consisting of a compound having an amino group and a (meth)acryloyl group, an amino compound, and a thiol compound with an epoxy group derived from a silane coupling agent,
   (6) an isocyanato group derived from an isocyanate compound, and
   (7) a mercapto group derived from a thiol compound.
[8] The automobile door according to any one of [1] to [7], wherein a surface of the glass member contacting the one or more resin coating layers is treated by at least one surface treatment selected from the group consisting of degreasing, UV ozone treatment, blasting, polishing, plasma treatment, and corona discharge.
[9] The automobile door according to any one of [1] to [8], wherein
   the glass member is a rear glass, and
   the resin member is at least one of an outer panel and an inner panel.
[10] A method for manufacturing an automobile door according to any one of [1] to [9], the method comprising heating the at least one resin coating layer and pressing together the glass member and the resin member so that the heated at least one resin coating layer is interposed between the glass member and the resin member to thereby join the glass member and the resin member.

### [ADVANTAGEOUS EFFECTS OF INVENTION]

According to the present disclosure, it is possible to provide an automobile door with a high joint strength between a glass member and a resin member by a simple method.

### BRIEF DESCRIPTION OF DRAWINGS

FIG. 1 is a schematic perspective view of an automobile back door according to one embodiment of the present disclosure.
FIG. 2 is a cross-sectional view along a line A-A in FIG. 1.
FIG. 3 is a schematic cross-sectional view of a composite laminate in one embodiment.
FIG. 4 is a schematic cross-sectional view of a composite laminate in another embodiment.
FIG. 5 is a schematic cross-sectional view of a state where a glass member and a resin member are joined through a resin coating layer.

### DESCRIPTION OF EMBODIMENTS

Next, embodiments of the present disclosure will be described with reference to the drawings.

In the present disclosure, "joining" means connecting one object to another. "Adhesive bonding" and "fusion bonding" are lower concepts. "Adhesive bonding" means rendering two pieces (to be bonded) a joined state through a tape or an adhesive or other organic materials (curable resin, thermoplastic resin, etc.) "Fusion bonding" means melting the surface of the thermoplastic resin, etc., of pieces to be joined by heat and clamping and cooling the pieces to render them a joined state through molecular diffusion and the resultant entanglement and crystallization.

In the present disclosure, "(meth)acryloyl" means acryloyl or methacryloyl. Similarly, "(meth)acryl" means acryl or methacryl, and "(meth)acrylate" means acrylate or methacrylate.

In the present disclosure, "ordinary temperature" means a general room temperature within a range of 25±5°C.

### Automobile Back Door

The present disclosure relates to art able to be applied to automobile doors as a whole. That is, the scope of application of the present disclosure includes any type of door so long as it includes a joined part of a glass member and a resin member. Specifically, the scope of application of the present disclosure is not limited to hatch type doors. Slide doors, gullwing doors, double doors, and all other types of automobile doors are also covered by the present disclosure. Below a "back door" of one type of hatch type door in particular among these doors will be explained in detail.

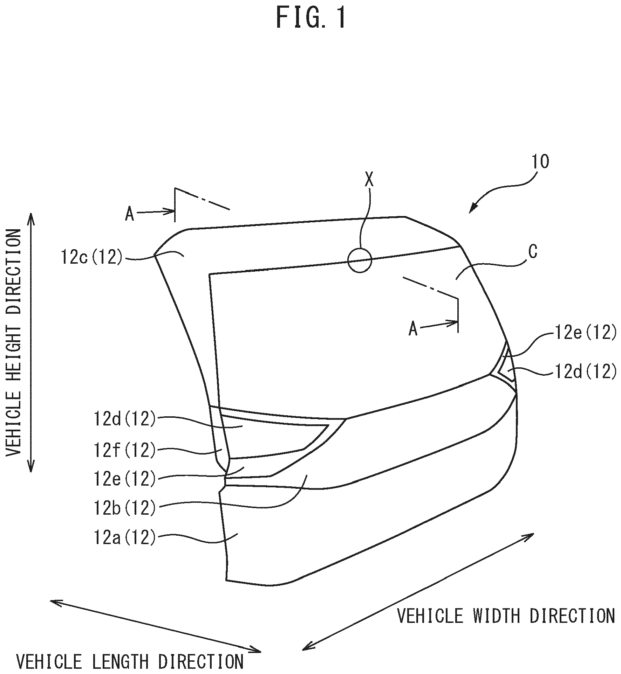

FIG. 1 is a schematic perspective view of an automobile back door according to one embodiment of the present disclosure. In the present disclosure, an "automobile back door" will also be simply referred to as a "back door". Further, the vehicle length direction shown in the present disclosure (drawings) means the direction of advance of the vehicle (usually the longitudinal direction) and means the direction vertical to the vehicle height direction, while the vehicle width direction means the direction perpendicular to both the vehicle length direction and the vehicle height direction.

As shown in FIG. 1, the back door 10 is a door opened and closed in use for when loading and unloading luggage to and from a rear luggage compartment of a hatchback type automobile. The back door 10 is composed of a resin outer panel 12 used as the frame for joining with a glass member, an inner panel (not shown) disposed on an inside of the outer panel 12 at the inside vehicle compartment side, and rear glass 14 disposed on the outer panel 12 at the outside vehicle compartment side so as to cover a cavity part C of the outer panel 12. Note that, in the example shown in FIG. 1, the case is shown where the frame-use outer panel 12 as a whole is made of a resin, but the present disclosure is not limited to this. That is, the present disclosure also includes cases where only the part of the frame which is joined with the glass member (rear glass 14) is made of a resin member and the rest of the parts are made of members other than resin ones (for example, ones made of metal).

The outer panel 12 includes a first panel part 12a positioned at the lowest side in the vehicle height direction, a second panel part 12b positioned at an upper side of the first panel part 12a in the vehicle height direction, a third panel part 12c positioned at the highest side in the vehicle height direction, and a pair of tail lights 12d, 12d positioned at the vehicle width direction sides between the second panel part 12b and the third panel part 12c. The tail lights 12d, 12d are surrounded by a fourth panel part 12e and a fifth panel part 12f. Further, the second panel part 12b, the third panel part 12c, and the fourth panel part 12e define the cavity part C for fitting in the rear glass 14.

The inner panel, while not shown, is for example used as a reinforcing member and is a panel formed with complicated asperities for attaching various equipment. The inner panel may be made of a resin or may be made of a metal or may be a combination of the same.

The rear glass 14 is, for example, a glass part to which a defogger for removing condensation or ice from the glass or an antenna conductor able to receive various frequency bands of signals is attached. Note that, in FIG. 1, the defogger and antenna conductor are not shown.

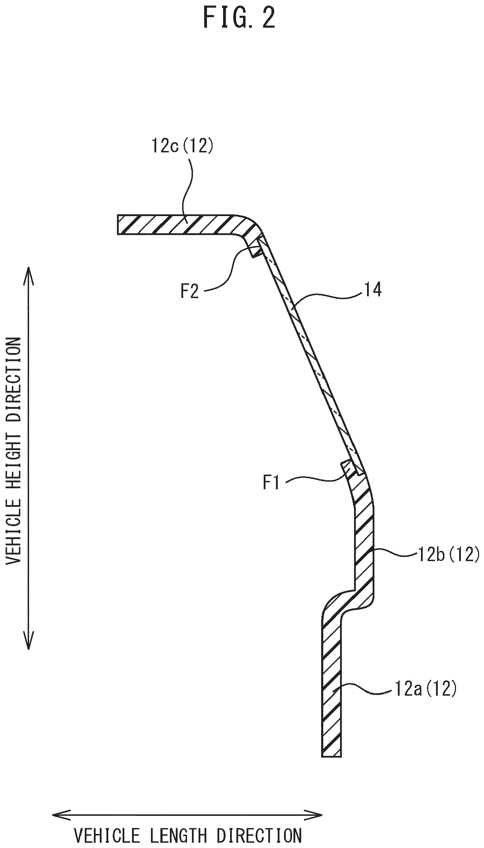

FIG. 2 is a cross-sectional view along a line A-A of FIG. 1. As shown in FIG. 2, the rear glass 14 is joined with a flange part F1 of the second panel part 12b and a flange part F2 of the third panel part 12c through later explained resin coating layers. Note that, the flange parts for joining with the rear glass 14 are not limited to these. While not shown in FIG. 2, a flange part is similarly provided at the fourth panel part 12e as well. As a result, in all of the second to fourth panel parts 12b, 12c, and 12e surrounding the cavity part C, flanges are consecutively formed at the cavity part C sides. All of the edge parts of the rear glass 14 are joined on these flanges through the resin coating layers.

The rear glass and the outer panel are joined through the resin coating layers explained below. The resin coating layers may be disposed on the rear glass, may be disposed on the outer panel, or may be disposed on both of the rear glass and the outer panel. Below, the rear glass will also be described as the "glass member 2" and the outer panel will also be described as the "resin member 5".

### Composite Laminate

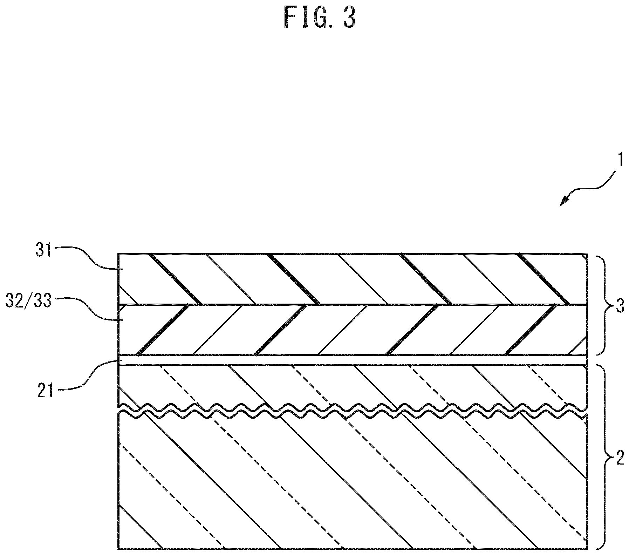

In one embodiment, one or more resin coating layers are disposed on the glass member 2 to form the composite laminate 1. FIG. 3 is a schematic cross-sectional view of the composite laminate 1 in one embodiment. The composite laminate 1 shown in FIG. 3 is provided with a glass member 2 and one or more resin coating layers 3 disposed on the glass member 2. At least one of the resin coating layers 3 is a modified polyolefin layer 31 formed from a resin composition containing a polyolefin.

The resin coating layers 3 are formed having their excellent bondability with the surface of the glass member 2 and exhibit an excellent bondability with a polyolefin as well. Due to this, the glass member 2 is given an excellent bondability with respect to a resin member 5 containing a polyolefin (ability to be joined through resin coating layers 3). Therefore, the resin coating layers 3 arranged on the joining surface of the glass member 2 can also be said to be primer layers in the composite laminate 1.

In the present disclosure, the "primer layers" mean layers which are interposed between the glass member 2 and the resin member 5 when the composite laminate 1 and the resin member 5 are joined and which improve the bondability of the glass member 2 to the resin member 5 (bondability through resin coating layers 3).

Further, the surface of the glass member 2 is protected by the resin coating layers 3, so it is possible to keep dirt from depositing on the surface of the glass member 2. For this reason, it is possible to obtain a composite laminate 1 able to maintain excellent bondability with respect to the resin member 5 even if stored over a long period of several months.

### Glass Member 2

The shape of the glass member 2 is not particularly limited. As the material of the glass member, for example, soda-lime glass, lead glass, borosilicate glass, and quartz glass may be mentioned.

The thickness of the glass member 2, from the viewpoint of strength, is preferably 0.3 mm or more, more preferably 0.5 mm or more. No upper limit of thickness of the glass member 2 is set, but the thickness is preferably 30 mm or less, more preferably 10 mm or less.

### Surface Treatment (Part)

Before disposing the resin coating layers 3 on the glass member 2, the surface of the glass member 2 is preferably treated for the purpose of removing contaminants on the surface and/or for the anchor effect. Due to the surface treatment, as shown in FIG. 3, the surface of the glass member 2 is formed with a surface treated part 21 and the bondability of the surface of the glass member 2 and the resin coating layers 3 can be improved.

As the surface treatment, for example, degreasing, UV ozone treatment, blasting, polishing, plasma treatment, corona discharge, laser treatment, etching treatment, and flame treatment may be mentioned.

As the surface treatment, surface treatment to clean the surface of the glass member 2 or surface treatment to form asperities on the surface is preferable. Specifically, at least one treatment selected from the group consisting of degreasing, UV ozone treatment, blasting, polishing, plasma treatment, and corona discharge is preferable.

The surface treatment may be of a single type or may be two types or more combined. As the specific methods of these surface treatments, known methods may be used.

Usually, hydroxy groups may be present on the glass surface. Due to the surface treatment, new hydroxy groups are generated and the hydroxy groups on the surface of the glass member 2 can be increased.

Degreasing is a method of removing grease or other contaminants on the surface of the glass member 2 by dissolving them with an organic solvent such as acetone and toluene.

UV ozone treatment is a method of cleaning or improving the surface by the action of the energy of the short wavelength ultraviolet light emitted from a low voltage mercury lamp and ozone (O₃ ) produced due to that energy. In the case of glass, organic impurities on the surface are removed. In general, a cleaning/surface improvement device using a low voltage mercury lamp is called a "UV ozone cleaner", "UV cleaning device", "UV surface improvement device", etc.

As the blasting, for example, wet blasting, shot blasting, and sandblasting may be mentioned. Wet blasting is preferable since a finer grain surface is obtained compared with dry blasting.

As the polishing, for example, buff polishing using a polishing cloth, roll polishing using polishing paper (sandpaper), and electrolytic polishing may be mentioned.

Plasma treatment is firing a plasma beam generated by a high voltage power supply and rod onto a material surface so as to excite its molecules and render them an activated state. As the plasma treatment, for example, atmospheric pressure plasma treatment able to impart hydroxy groups or other polar groups to a surface may be mentioned.

Corona discharge is a method generally used for modifying the surface of a polymer film. Electrons discharged from electrodes cut the main chains or side chains of the polymer in the surface layer. The generated radicals generate hydroxy groups or other polar groups on the surface.

Laser treatment is the art of firing a laser beam to rapidly heat and cool only a surface layer to improve the surface characteristics of the material. It is a method effective for roughening a surface. As the laser treatment, known treatment techniques can be used.

As the etching treatment, for example, chemical etching treatments, such as an alkali method, a phosphoric acid-sulfuric acid method, a fluoride method, a chromic acid-sulfuric acid method, and a ferric chloride method, and electrochemical etching treatments, such as electrolytic etching may be mentioned.

Flame treatment is a method of burning a mixed gas of a combustible gas and air so as to convert oxygen in the air to plasma and supplying the produced oxygen plasma to a material surface to render the material surface hydrophilic. As the flame treatment, a known flame treatment technique can be used.

### Resin Coating Layers 3

The resin coating layers 3 are disposed on the glass member 2. There may be a single resin coating layer 3 or a plurality of layers.

### Modified Polyolefin Layer 31

At least one resin coating layer 3 is a modified polyolefin layer 31 formed from a resin composition including a polyolefin. By having the resin coating layers 3 include a modified polyolefin layer 31, the glass member 2 and the resin member 5 can be joined through the resin coating layers 3.

The resin coating layers 3 may be composed of a plurality of layers including a modified polyolefin layer 31 and layers other than the modified polyolefin layer 31, and the layers other than the modified polyolefin layer 31 may be made at least one layer selected from the group consisting of a thermoplastic epoxy resin layer 32 formed from a resin composition including a thermoplastic epoxy resin and a curable resin layer 33 formed from a resin composition including a curable resin.

In the case that there are a plurality of resin coating layers 3, the essential modified polyolefin layer 31 is preferably provided so as to be surface-most at the opposite side from the glass member 2.

The modified polyolefin layer 31 is preferably at least one type of layer selected from the group consisting of a layer including a reaction product 1 obtained by a polyaddition reaction of a bifunctional epoxy resin and a bifunctional phenol compound in the presence of a maleic anhydride-modified polyolefin and simultaneously by a reaction with the maleic anhydride in the maleic anhydride-modified polyolefin skeleton, a layer including a reaction product 2 obtained by a reaction of a thermoplastic epoxy resin produced by a polyaddition reaction of a bifunctional epoxy resin and a bifunctional phenol compound and the maleic anhydride in the maleic anhydride-modified polyolefin skeleton, and a layer including a mixture of a thermoplastic epoxy resin and a polyolefin

### Reaction Product 1

The reaction product 1 can be obtained by a polyaddition reaction of a bifunctional epoxy resin and a bifunctional phenol compound in the presence of a catalyst in a solution of a maleic anhydride-modified polyolefin. At this time, the maleic anhydride-modified polyolefin is believed to react with the bifunctional epoxy resin, the bifunctional phenol compound, and a thermoplastic epoxy resin produced from the bifunctional epoxy resin and the bifunctional phenol compound explained later in the section on the reaction product 2.

### Maleic Anhydride-Modified Polyolefin

The maleic anhydride-modified polyolefin is a polyolefin on which maleic anhydride is grafted. For example, maleic anhydride-modified polyethylene and maleic anhydride-modified polypropylene may be mentioned. As the maleic anhydride-modified polyolefin, specifically, Kayabrid 002PP, 002PP-NW, 003PP, and 003PP-NW manufactured by Kayaku Akzo Corporation and the Modic series manufactured by Mitsubishi Chemical Corporation may be mentioned. As a polypropylene additive made functional by maleic anhydride, SCONA TPPP2112GA, TPPP8112GA, or TPPP9212GA manufactured by BYK may be used together with the maleic anhydride-modified polyolefin.

### Bifunctional Epoxy Resin

As the bifunctional epoxy resin, for example, a bisphenol type epoxy resin and a biphenyl type epoxy resin may be mentioned. The bifunctional epoxy resin may be used alone or two or more types may be used together. As the bifunctional epoxy resin, specifically, "jER^{™} 828", "jER^{™} 834", "jER^{™} 1001", "jER^{™} 1004", "jER^{™} 1007", and "jER^{™} YX-4000" manufactured by Mitsubishi Chemical Corporation may be mentioned.

### Bifunctional Phenol Compound

As the bifunctional phenol compound, for example, bisphenols and biphenols may be mentioned. The bifunctional phenol compound may be used alone or two or more types may be used together. As combinations of bifunctional phenol compounds, for example, a bisphenol A type epoxy resin and bisphenol A; a bisphenol A type epoxy resin and bisphenol F; a biphenyl type epoxy resin and 4,4'-biphenol; and "WPE190" and "EX-991L" manufactured by Nagase ChemteX Corporation may be mentioned.

As the catalyst for a polyaddition reaction of a thermoplastic epoxy resin, for example, tertiary amines, such as triethylamine and 2,4,6-tris(dimethylaminomethyl)phenol, and phosphorus-based compounds, such as triphenyl phosphine, are preferable.

### Reaction Product 2

The reaction product 2 can be obtained by a reaction of a thermoplastic epoxy resin produced by a polyaddition reaction of a bifunctional epoxy resin and a bifunctional phenol compound and a maleic anhydride-modified polyolefin. As the maleic anhydride-modified polyolefin, bifunctional epoxy resin, and bifunctional phenol compound used in this reaction, ones the same as that when producing the reaction product 1 can be used.

### Thermoplastic Epoxy Resin

The thermoplastic epoxy resin used for the manufacture of the reaction product 2 is also called a "in-situ polymerized type phenoxy resin", "cured-in-place type phenoxy resin", "cured-in-place type epoxy resin", etc. A thermoplastic structure, that is, a linear polymer structure, is formed by a polyaddition reaction of a bifunctional epoxy resin and a bifunctional phenol compound in the presence of a catalyst. Here, a "linear polymer" means a polymer not including cross-linked structures in the polymer molecule but of a one-dimensional straight chain shape. A thermoplastic epoxy resin differs from a curable resin forming a three-dimensional network by cross-linked structures in that the former has thermoplasticity.

The total amount of the bifunctional epoxy resin and the bifunctional phenol compound used when manufacturing the reaction product 1 or reaction product 2 is preferably 5 to 100 parts by mass with respect to 100 parts by mass of the maleic anhydride-modified polyolefin, more preferably 5 to 60 parts by mass, still more preferably 10 to 30 parts by mass.

Note that, there are diverse types of reactions occurring when obtaining the reaction product 1 and reaction product 2, such as a reaction of a maleic anhydride-modified polyolefin and a bifunctional epoxy resin, a reaction of a maleic anhydride-modified polyolefin and a bifunctional phenol compound, a reaction connecting maleic anhydrides with an epoxy, a reaction of epoxy groups at the terminals of a thermoplastic epoxy resin and maleic anhydride, a reaction of secondary hydroxy groups in a thermoplastic epoxy resin skeleton and maleic anhydride, etc. It is also not possible to comprehensively express the specific forms based on the combinations of the same. Accordingly, it is impossible or impractical to directly specify a modified polyolefin obtained as the reaction product 1 or reaction product 2 by its structure or characteristics.

A mixture of a thermoplastic epoxy resin and a polyolefin can be obtained by mixing a thermoplastic epoxy resin similar to one used in the manufacture of the above-mentioned reaction product 2 and a polyolefin by an ordinary method.

### Polyolefin

As the polyolefin used for formation of the mixture, a polyolefin used for the resin member 8 can be used. The polyolefin is not particularly limited and may also be a general synthetic resin. As the polyolefin, for example, polyethylene and polypropylene may be mentioned.

The resin coating layers 3 are disposed on the surface of the glass member 2. As explained above, the resin coating layers 3 may be disposed on the surface of a glass member 2 which has not been surface treated or may be disposed on the surface of a glass member 2 which has been surface treated. The resin coating layers 3 may also be disposed on the surface of a later explained functional-group containing layer 4.

### Thermoplastic Epoxy Resin Layer 32

The resin coating layers 3 can be composed of a plurality of layers including a modified polyolefin layer 31 and layers other than the modified polyolefin layer 31. At least one layer other than the modified polyolefin layer 31 can be composed of a thermoplastic epoxy layer 32 formed from a resin composition including a thermoplastic epoxy resin.

The resin composition including a thermoplastic epoxy resin preferably includes a thermoplastic epoxy resin in 40 mass% or more, more preferably includes it in 70 mass% or more.

### Thermoplastic Epoxy Resin

The thermoplastic epoxy resin, like the thermoplastic epoxy resin used for the manufacture of the reaction product 2, is a resin forming a thermoplastic structure, that is, a linear polymer structure, by a polyaddition reaction of a bifunctional epoxy resin and a bifunctional phenol compound in the presence of a catalyst. It differs from a curable resin forming a three-dimensional network by cross-linked structures in that the former has thermoplasticity. By having such a characteristic, the thermoplastic epoxy resin can form a thermoplastic epoxy resin layer 32 excellent in bondability with the glass member 2 by in-situ polymerization and excellent in bondability with the modified polyolefin layer 31. Therefore, when manufacturing the composite laminate 1, it is preferable to form the thermoplastic epoxy resin layer 32 as a layer below the modified polyolefin layer 31 (glass member 2 side). The thermoplastic epoxy resin layer 32 can be formed by a polyaddition reaction of a composition including monomers of the thermoplastic epoxy resin.

The polyaddition reaction of a composition including monomers of the thermoplastic epoxy resin is preferably performed on the surface of the later explained functional-group containing layer 4. A resin coating layer 3 including a thermoplastic epoxy resin layer 32 formed in such a manner is excellent in bondability with the glass member 2 and excellent in bondability with the later explained resin member 5.

The method of forming the thermoplastic epoxy resin layer 32 using the composition including monomers of the thermoplastic epoxy resin is not particularly limited. For example, a spray coating method and a dipping method may be mentioned.

To make the polyaddition reaction of the thermoplastic epoxy resin sufficiently proceed and form the desired resin coating layers, the composition including monomers of the thermoplastic epoxy resin may contain a solvent. Optionally, it may also contain an additive, such as a coloring agent. In this case, the monomers of the thermoplastic epoxy resin are preferably the main constituents in the constituents of the composition other than the solvent. "Main constituents" mean a content of the monomers of the thermoplastic epoxy resin of 50 to 100 mass%. The content of the monomers of the thermoplastic epoxy resin is preferably 60 mass% or more, more preferably 80 mass% or more.

As the monomers for obtaining the thermoplastic epoxy resin, a combination of a bifunctional epoxy resin and a bifunctional phenol compound is preferable.

The polyaddition reaction, while also depending on the type of the reaction compound, etc., is preferably performed by heating at a temperature of 120 to 200°C for 5 to 90 minutes. Specifically, the thermoplastic epoxy resin layer can be formed by coating the composition, then suitably evaporating the solvent and then heating to cause the polyaddition reaction.

### Curable Resin Layer 33

The resin coating layers 3 can be composed of a plurality of layers including a modified polyolefin layer 31 and layers other than the modified polyolefin layer 31. At least one layer other than the modified polyolefin layer 31 can be composed of a curable resin layer 33 formed from a resin composition including a curable resin.

To make the curing reaction of the curable resin sufficiently proceed and form the desired resin coating layer, the resin composition including the curable resin may contain a solvent. Optionally, it may also contain an additive, such as a coloring agent. In this case, the curable resin is preferably the main constituent in the constituents of the resin composition other than the solvent. "Main constituent" means a content of the curable resin of 40 to 100 mass%. The content of the curable resin is preferably 60 mass% or more, more preferably 70 mass% or more, still more preferably 80 mass% or more.

As the curable resin, for example, a urethane resin, an epoxy resin, a vinyl ester resin, and an unsaturated polyester resin may be mentioned.

The curable resin layer 33 may be formed from one type of these resins or may be formed from two types or more mixed together. The curable resin layer 33 may also be composed of a plurality of layers and the layers may be respectively formed by resin compositions containing different types of curable resins.

The method of forming the curable resin layer 33 using the composition including monomers of the curable resin is not particularly limited. For example, a spray coating method and a dipping method may be mentioned.

In the present disclosure, "curable resin" means a resin which cures by cross-linking. It is not limited to a heat curing type. A type curing at ordinary temperature and a photocuring type are also included. A photocuring type can also be cured in a short time by exposure to visible light or ultraviolet light. A photocuring type may also be used together with a heat curing type and/or ordinary temperature curing type. As the photocuring type, for example, vinyl ester resins, such as "Ripoxy^{™} LC-760" and " Ripoxy^{™} LC-720" manufactured by Showa Denko K.K., may be mentioned.

### Urethane Resin

A urethane resin is usually a resin obtained by a reaction of isocyanato groups of an isocyanate compound and hydroxy groups of a polyol compound. A urethane resin corresponding to one defined in the ASTM D16 as "a coating containing polyisocyanate with a 10 wt% or more of vehicle nonvolatile constituents" is preferable. The urethane resin may be a one-part type or may be a two-part type.

As the one-part type urethane resin, for example, an oil-modified type (one curing by oxidative polymerization of unsaturated fatty acid groups), a moisture curing type (one curing by a reaction of isocyanato groups and water in the air), a block type (one curing by a reaction of isocyanato groups disassociated and regenerated by heating of a block agent and hydroxy groups), and a lacquer type (one curing by drying by evaporation of a solvent) may be mentioned. Among these, from the viewpoint of ease of handling, a moisture curing type one-part urethane resin may be suitably used. As the moisture curing type one-part urethane resin, specifically "UM-50P" manufactured by Showa Denko K.K. may be mentioned.

As the two-part urethane resin, for example, a catalyst curing type (one curing by a reaction of isocyanato groups and water, etc., in the air in the presence of a catalyst) and a polyol curing type (one curing by a reaction of isocyanato groups and hydroxy groups of a polyol compound) may be mentioned.

As the polyol compound of the polyol curing type, for example, a polyester polyol, a polyether polyol, and a phenol resin may be mentioned.

As the isocyanate compound having an isocyanato group in the polyol curing type, for example, aliphatic isocyanates, such as hexamethylene diisocyanate (HDI), tetramethylene diisocyanate, and diisocyanate dimerate; aromatic isocyanates, such as 2,4- or 2,6-tolylene diisocyanate (TDI) or their mixtures, p-phenylene diisocyanate, xylylene diisocyanate, diphenylmethane diisocyanate (MDI) or their polynuclear mixture, polymeric MDI; and alicyclic isocyanates, such as isophorone diisocyanate (IPDI), may be mentioned.

The ratio of the polyol compound and the isocyanate compound in the polyol curing type two-part urethane resin is preferably such that a molar equivalent ratio of hydroxy groups/isocyanato groups is in a range of 0.7 to 1.5.

As the urethane catalyst used in the two-part urethane resin, for example, amine-based catalysts, such as triethylenediamine, tetramethylguanidine, N,N,N',N'-tetramethylhexane-1,6-diamine, dimethyletheramine, N,N,N',N",N"-pentamethyldipropylenetriamine, N-methylmorpholine, bis(2-dimethylaminoethyl)ether, dimethylaminoethoxyethanol, and triethylamine; and organotin-based catalysts, such as dibutyltin diacetate, dibutyltin dilaurate, dibutyltin thiocarboxylate, and dibutyltin dimaleate may be mentioned.

In the polyol curing type, in general, the urethane catalyst is preferably contained in 0.01 to 10 parts by mass with respect to 100 parts by mass of the polyol compound.

### Epoxy Resin

An epoxy resin is a resin having at least two epoxy groups in its molecule. As prepolymers before curing of the epoxy resin, for example, an ether-based bisphenol type epoxy resin, a novolac type epoxy resin, a polyphenol type epoxy resin, an aliphatic type epoxy resin, an ester type aromatic epoxy resin, a cyclic aliphatic epoxy resin, and an ether-ester-based epoxy resin may be mentioned. Among these as well, a bisphenol A type epoxy resin is suitably used. An epoxy resin may be used alone or may be used in two types or more combined.

As the bisphenol A type epoxy resin, specifically, "jER^{™} 828" and "jER^{™} 1001" manufactured by Mitsubishi Chemical Corporation may be mentioned.

As the novolac type epoxy resin, specifically "D.E.N.^{™} 438^{™}" manufactured by the Dow Chemical Company may be mentioned.

As the curing agent used for an epoxy resin, for example, aliphatic amines, aromatic amines, acid anhydrides, phenol resins, thiols, imidazoles, and cationic catalysts may be mentioned. By using the curing agent together with long chain aliphatic amines and/or thiols, it is possible to form resin coating layers 3 having large elongation and excellent in impact resistance.

As specific examples of thiols, compounds which are the same as those illustrated as thiol compounds for forming the later explained functional group-containing layer 4 may be mentioned. Among these, from the viewpoint of the elongation and impact resistance of the resin coating layers 3, pentaerythritol tetrakis(3-mercaptobutyrate) (for example, "Karenz MT^{™} PE1" manufactured by Showa Denko K.K.) is preferable.

### Vinyl Ester Resin

A vinyl ester resin is obtained by dissolving a vinyl ester compound in a polymerizable monomer (for example, styrene). A vinyl ester resin is generally also called an epoxy(meth)acrylate resin, but in the present disclosure, a urethane(meth)acrylate resin is also included in a vinyl ester resin.

As the vinyl ester resin, for example, the ones described in the "Polyester Resin Handbook" (Nikkan Kogyo Shimbun, published 1988), the "Paint Terminology Dictionary" (Japan Society of Color Material, published 1993), etc., can be used. As the vinyl ester resin, specifically, "Ripoxy^{™} R-802", "Ripoxy^{™} R-804", and "Ripoxy^{™} R-806" manufactured by Showa Denko K.K. may be mentioned.

As the urethane(meth)acrylate resin, for example, a radical polymerizable unsaturated group-containing oligomer obtained by reacting an isocyanate compound and a polyol compound, then reacting therewith a hydroxy group-containing (meth)acrylate monomer (and optionally a hydroxy group-containing allyl ether monomer) may be mentioned. As the urethane(meth)acrylate resin, specifically " Ripoxy^{™} R-6545" manufactured by Showa Denko K.K. may be mentioned.

The vinyl ester resin can be cured by radical polymerization in the presence of a catalyst, such as an organoperoxide.

As the organoperoxide, for example, ketone peroxides, peroxyketals, hydroperoxides, diallyl peroxides, diacyl peroxides, peroxy esters, and peroxy dicarbonates may be mentioned. These peroxides may be combined with cobalt metal salts, etc., to enable curing at ordinary temperature.

As the cobalt metal salts, for example, cobalt naphthenate, cobalt octylate, and cobalt hydroxide may be mentioned. Among these, cobalt naphthenate and cobalt octylate are preferable.

### Unsaturated Polyester Resin

An unsaturated polyester resin is a condensation product (unsaturated polyester) obtained by an esterification reaction of a polyol compound and an unsaturated polybasic acid (and optionally a saturated polybasic acid) dissolved in a polymerizable monomer (for example, styrene).

As the unsaturated polyester resin, for example, the ones described in the "Polyester Resin Handbook" (Nikkan Kogyo Shimbun, published 1988), the "Paint Terminology Dictionary" (Japan Society of Color Material, published 1993), etc., can be used. As the unsaturated polyester resin, specifically, "Rigolac^{™}" manufactured by Showa Denko K.K. may be mentioned.

The unsaturated polyester resin can be cured by radical polymerization by heating in the presence of a catalyst in the same way as the vinyl ester resin.

### Functional-Group Containing Layer 4

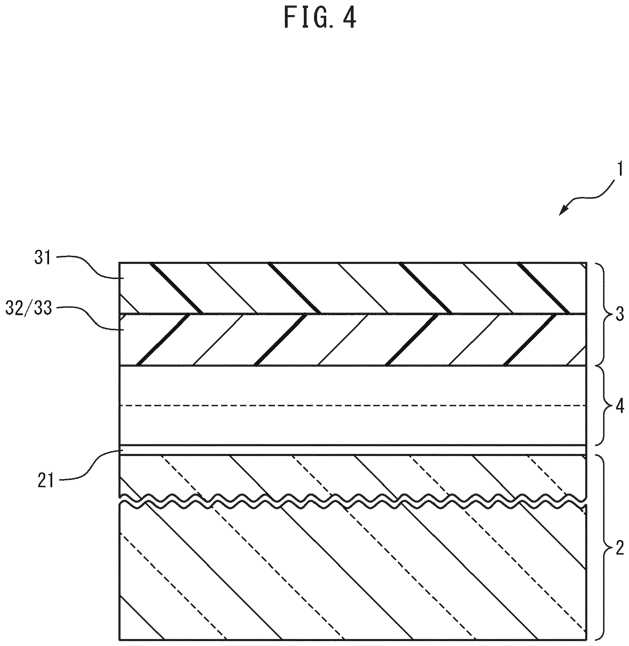

As shown in FIG. 4, between the glass member 2 and the resin coating layers 3, one or more functional-group containing layers 4 disposed contiguous with the glass member 2 and the resin coating layers 3 may be provided. In the case of providing functional-group containing layers 4, the functional groups of the functional-group containing layers 4 react with the hydroxy groups of the surface of the glass member 2 and the functional groups of the resin constituting the resin coating layers 3 to form chemical bonds whereby it is possible to improve the bondability with the surface of the glass member 2 and the resin coating layers 3, and as a result, possible to also improve the bondability between the composite laminate 1 and the resin member 5 to be bonded with (bondability through resin coating layers 3).

### Treatment

The functional-group containing layers 4 are preferably formed by treatment of the surface of the glass member 2 using at least one agent selected from the group consisting of the following (1') to (7'). The treatment is more preferably at least one type selected from the following (2") to (5").
(1') a silane coupling agent containing at least one functional group selected from the group consisting of an epoxy group, an amino group, a (meth)acryloyl group, and a mercapto group,
(2') a combination of at least one compound selected from an epoxy compound and a thiol compound and a silane coupling agent having an amino group,
(3') a combination of at least one compound selected from the group consisting of an epoxy compound, an amino compound, an isocyanate compound, a compound having a (meth)acryloyl group and an epoxy group, and a compound having a (meth)acryloyl group and an amino group, and a silane coupling agent having a mercapto group,
(4') a combination of a thiol compound and a silane coupling agent having a (meth)acryloyl group,
(5') a combination of at least one compound selected from the group consisting of a compound having an amino group and a (meth)acryloyl group, an amino compound, and a thiol compound, and a silane coupling agent having an epoxy group,
(6') an isocyanate compound, and
(7') a thiol compound.
(2") treatment for adding at least one compound selected from an epoxy compound and a thiol compound after treatment by a silane coupling agent having an amino group,
(3") treatment for adding at least one compound selected from the group consisting of an epoxy compound, an amino compound, an isocyanate compound, a compound having a (meth)acryloyl group and an epoxy group, and a compound having a (meth)acryloyl group and an amino group after treatment by a silane coupling agent having a mercapto group,
(4") treatment for adding a thiol compound after treatment by a silane coupling agent having a (meth)acryloyl group, and
(5") treatment for adding at least one compound selected from the group consisting of a compound having an amino group and a (meth)acryloyl group, an amino compound, and a thiol compound after treatment by a silane coupling agent having an epoxy group

### Functional Groups

The functional-group containing layers 4 preferably include functional groups introduced by treatment, specifically preferably include at least one functional group selected from the group consisting of the following (1) to (7):
(1) at least one functional group derived from a silane coupling agent and selected from the group consisting of an epoxy group, an amino group, a (meth)acryloyl group, and a mercapto group,
(2) a functional group produced by a reaction of at least one compound selected from the group consisting of an epoxy compound and a thiol compound with an amino group derived from a silane coupling agent,
(3) a functional group produced by a reaction of at least one compound selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
(4) a functional group produced by a reaction of a thiol compound with a (meth)acryloyl group derived from a silane coupling agent,
(5) a functional group produced by a reaction of at least one compound selected from the group consisting of a compound having an amino group and a (meth)acryloyl group, an amino compound, and a thiol compound with an epoxy group derived from a silane coupling agent,
(6) an isocyanato group derived from an isocyanate compound, and
(7) a mercapto group derived from a thiol compound.

Before forming the functional-group containing layers 4 on the glass member 2, it is possible to provide the surface of the glass member 2 with the above-mentioned surface treatment part 21. As the surface treatment, at least one treatment selected from the group consisting of degreasing, UV ozone treatment, blasting, polishing, plasma treatment, and corona discharge is preferable. Due to the synergistic effect of the anchor effect due to the fine asperities of the surface treated part 21 and the chemical bonds formed by a reaction of the functional groups of the functional-group containing layers 4 with the hydroxy groups of the surface of the glass member 2 and the functional groups of the resin constituting the resin coating layers 3, it is possible to further improve the bondability between the surface of the glass member 2 and the resin coating layers 3 and the bondability between the composite laminate 1 and the resin member 5 to be joined to (bondability through resin coating layers 3).

The method of forming the functional-group containing layers 4 using the silane coupling agent, the isocyanate compound, the thiol compound, etc., is not particularly limited. For example, a spray coating method and a dipping method may be mentioned. Specifically, it is possible to form the functional-group containing layers 4 by dipping the glass member 2 in a solution of a concentration of 5 to 50 mass% of a silane coupling agent, etc. at ordinary temperature to 100°C for 1 minute to 5 days, then making this dry at ordinary temperature to 100°C for 1 minute to 5 hours.

### Silane Coupling Agent

As the silane coupling agent, for example, it is possible to use a known one able to be used for surface treatment of glass fiber, etc. Due to the silanol groups produced by hydrolysis of the silane coupling agent or silanol groups of the oligomer compound produced by condensation of the silanol groups reacting and bonding with the hydroxy groups present on the surface of the glass member 2, it is possible to impart (introduce) to the glass member 2 functional groups based on the structure of the silane coupling agent able to chemically bond with the resin coating layers 3.

The silane coupling agent is not particularly limited, but, for example, a silane coupling agent having an epoxy group, a silane coupling agent having an amino group, a silane coupling agent having a mercapto group, or a silane coupling agent having a (meth)acryloyl group can be used. The silane coupling agents may be used alone or two or more types may be used together.

As the silane coupling agent having an epoxy group, for example, 2-(3,4-epoxycyclohexyl)ethyltrimethoxysilane, 3-glycidoxypropylmethyltrimethoxysilane, 3-glycidoxypropylmethyldiethoxysilane, 3-glycidoxypropylmethyldiethoxysilane, and 3-glycidoxypropyltriethoxysilane may be mentioned.

As the silane coupling agent having an amino group, for example, N-2-(aminoethyl)-3-aminopropylmethyldimethoxysilane, N-2-(aminoethyl)-3-aminopropylmethyldimethoxysilane, N-2-(aminoethyl)-3-aminopropyltrimethoxysilane, 3-aminopropyltrimethoxysilane, and 3-aminopropyltriethoxysilane may be mentioned.

As the silane coupling agent having a mercapto group, for example, 3-mercaptopropylmethyldimethoxysilane and dithioltriazinepropyltriethoxysilane may be mentioned.

As the silane coupling agent having a (meth)acryloyl group, for example, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane may be mentioned.

As other effective silane coupling agents, for example, silane coupling agents having a vinyl group, such as vinyltrimethoxysilane, vinyltriethoxysilane, and p-styryltrimethoxysilane, 3-isocyanatopropyltriethoxysilane, 3-triethoxysilyl-N-(1,3-dimethyl-butylidene)propylamine, N-phenyl-3-aminopropyltrimethoxysilane, and a hydrochloride of N-(vinylbenzyl)-2-aminopropyltrimethoxysilane, tris(trimethoxysilylpropyl)isocyanurate, and 3-ureidopropyltrialkoxysilane may be mentioned.

### Epoxy Compound

As the epoxy compound, a known epoxy compound can be used. The epoxy compound is preferably a polyvalent epoxy compound or a compound having an alkenyl group other than an epoxy group. The epoxy compound is not particularly limited. For example, glycidyl (meth)acrylate and allyl glycidyl ether having a terminal group of a (meth)acryloyl group or an allyl group as a radical reactive group, 1,6-hexanediol diglycidyl ether having a terminal group of an epoxy group, and an epoxy resin having two or more epoxy groups in its molecule may be mentioned. The epoxy compound may also be an alicyclic epoxy compound. As the alicyclic epoxy resin, for example, 3,4-epoxycyclohexylmethyl methacrylate (CYM^{™} M100 manufactured by Daicel Corporation), 1,2-epoxy-4-vinylcyclohexane (CEL2000 manufactured by Daicel Corporation), and 3',4'-epoxycyclohexylmethyl 3,4-epoxycyclohexanecarboxylate (CEL2021P manufactured by Daicel Corporation) may be mentioned.

### Thiol Compound

Regarding the thiol compound, by the mercapto groups in the thiol compound reacting and bonding with the hydroxy groups present on the surface of the glass member 2, it is possible to impart (introduce) to the glass member 2 functional groups based on the structure of the thiol compound able to chemically bond with the resin coating layers 3 or the resin member 5.

The thiol compound is not particularly limited. For example, pentaerythritol tetrakis(3-mercaptopropionate) (for example, "QX40" manufactured by Mitsubishi Chemical Corporation or "QE-340M" manufactured by Toray Fine Chemicals Co., Ltd.), an ether-based primary thiol (for example, "Capcure 3-800" manufactured by Cognis), 1,4-bis(3-mercaptobutylyloxy)butane (for example, "Karenz MT^{™} BD1" manufactured by Showa Denko K.K.), pentaerythritol tetrakis(3-mercaptobutyrate) (for example, "Karenz MT^{™} PE1" manufactured by Showa Denko K.K.), and 1,3,5-tris(3-mercaptobutyloxyethyl)-1,3,5-triazine-2,4,6(1H,3H,5H)-trione (for example, "Karenz MT^{™} NR1" manufactured by Showa Denko K.K.) may be mentioned.

### Amino Compound

As the amino compound, a known amino compound can be used. The amino compound is preferably a polyfunctional amino compound or a compound having an alkenyl group other than an amino group (including an amide group). The amino compound is not particularly limited. For example, compounds with terminal amino groups, such as ethylenediamine, 1,2-propanediamine, 1,3-propanediamine, 1,4-diaminobutane, hexamethylenediamine, 2,5-dimethyl-2,5-hexadiamine, 2,2,4-trimethyhexamethylenediamine, diethylenetriamine, triethylenetetramine, tetraethylenepentamine, pentaethylenehexamine, 4-aminomethyloctamethylenediamine, 3,3'-iminobis(propylamine), 3,3'-methyliminobis(propylamine), bis(3-aminopropyl) ether, 1,2-bis(3-aminopropyloxy)ethane, p-menthane-1,8-diamine, isophoronediamine, bisaminomethylnorbornane, bis(4-aminocyclohexyl)methane, bis(4-amino-3-methylcyclohexyl)methane, 1,3-diaminocyclohexane, 3,9-bis(3-aminopropyl)-2,4,8,10-tetraoxaspiro[5,5]undecane, aminoethylpiperadine, and (meth)acrylamides with an end group having a (meth)acryloyl group as a radical reactive group may be mentioned.

### Isocyanate Compound

Regarding the isocyanate compound, by the isocyanato groups in the isocyanate compound reacting and bonding with the hydroxy groups present on the surface of the glass member 2, it is possible to impart (introduce) to the glass member 2 functional groups based on the structure of the isocyanate compound able to chemically bond with the resin coating layers 3.

The isocyanate compound is not particularly limited. For example, polyfunctional isocyanates with terminal groups of isocyanato groups, such as diphenylmethane diisocyanate (MDI), hexamethylene diisocyanate (HDI), tolylene diisocyanate (TDI), and isophorone diisocyanate (IPDI), and isocyanate compounds with terminal groups of radical reactive groups, such as 2-isocyanatoethyl methacrylate (for example, "Karenz MOI^{™}" manufactured by Showa Denko K.K.), 2-isocyanatoethyl acrylate (for example, "Karenz AOI^{™}", "AOI-VM^{™}" manufactured by Showa Denko K.K.),), and 1,1-(bisacryloyloxyethyl)ethyl isocyanate (for example, "Karenz BEI^{™}" manufactured by Showa Denko K.K.),) may be mentioned.

### Automobile Back Door 10 (Glass-Polyolefin Composite)

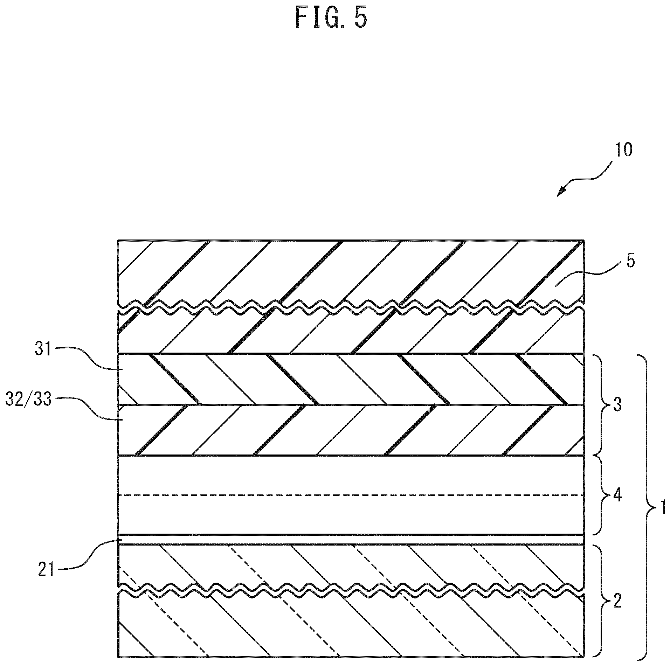

FIG. 5 is a schematic cross-sectional view of the state where the glass member 2 and the resin member 5 are joined through the resin coating layers 3, for example, is a view showing a circled part X of FIG. 1. In the automobile back door (glass-polyolefin composite) 10 shown in FIG. 5, the surface of the composite laminate 1 at the resin coating layer 3 side and the resin member 5 are joined.

As explained above, each resin coating layer 3 including a thermoplastic epoxy resin layer 32 is excellent in bondability with the glass member 2 and is excellent in bondability with the resin member 5, so it is possible to manufacture a back door 10 with a glass member 2 and a resin member 5 joined with a high strength. Therefore, according to the automobile door of the present disclosure, it is possible to realize an excellent joint strength between a glass material and a resin material.

The thickness of the resin coating layers 3 (dried thickness) depends on the type of the resin of the resin member 5 and the joint area, but from the viewpoint of obtaining an excellent joint strength with the resin member 5 and the viewpoint of keeping stress from concentrating at the resin end part of the interface due to thermal contraction between materials, the thickness is preferably 1 µm to 10 mm, more preferably 20 µm to 3 mm, still more preferably 40 µm to 1 mm. In the case that there are a plurality of resin coating layers, the thickness of the resin coating layers 3 (thickness after drying) is the total thickness of the layers.

### Resin Member 5

The resin member 5 includes a polyolefin. The polyolefin is not particularly limited. For example, polyethylene and polypropylene may be mentioned.

Polypropylenes are generally classified into homopolymers high in rigidity obtained by polymerization of only polypropylene, random polymers high in transparency and flexible obtained by copolymerization with a small amount of ethylene, and block copolymers high in impact resistance with rubber constituents (EPR) uniformly dispersed in the homopolymer or random polymer. The polypropylene may include a homopolymer, a random polymer, or a block polymer or mixtures of the same. The polypropylene may also be a high strength type including talc, glass fibers, or carbon fibers. As the talc-containing polypropylene, for example, product name TRC104N manufactured by Sun Aroma Co., Ltd., may be mentioned. As the glass fiber-containing polypropylene, for example, product name PP-GF40-01 F02 manufactured by Daicel Miraizu Ltd., may be mentioned. As the carbon fiber-containing polypropylene, for example, product name PP-CF40-11 F008 manufactured by Daicel Miraizu Ltd., may be mentioned.

A glass fiber-containing polypropylene is one type of glass fiber-reinforced resin (GFRP), while a carbon fiber-containing polypropylene is one type of carbon fiber-reinforced resin (CFRP). The resin containing glass fibers, carbon fibers, or other reinforcing fibers may also be in the form of a sheet molding compound (SMC), a bulk molding compound (BMC), or other shaped articles. An SMC is a sheet shaped article obtained by impregnating a resin composition containing a mixture of a polypropylene, a shrinkage reducing agent, a filler, etc., into glass fibers, carbon fibers, or other reinforcing fibers.

### Method for Manufacturing Automobile Back Door 10 (Glass-Polyolefin Composite)

As a method for manufacturing an automobile back door 10 of one embodiment, a method of bonding the resin member 5 to the resin coating layers 3 of the composite laminate 1 by at least one type of method selected from the group consisting of hot air fusion bonding, hot plate fusion bonding, ultrasonic fusion bonding, vibration fusion bonding, electromagnetic induction fusion bonding, high frequency fusion bonding, laser beam fusion bonding, and hot press fusion bonding may be mentioned. The resin member 5 can be fabricated separate from the composite laminate 1.

As a method for manufacturing an automobile back door 100 of another embodiment, a method of forming the resin member 5 on the resin coating layer 3 of the composite laminate 1 by injection molding, press forming, filament winding, hand layup, transfer molding, etc., and simultaneously joining the surface of the composite laminate 1 at the resin coating layer 3 side and the resin member 5 may be mentioned.

From the viewpoints of lightening the demands on the manufacturing equipment, streamlining the production process, and increasing the freedom of design of resin members, it is advantageous that the automobile back door 10 be manufactured by the hot press method. Specifically, it is possible to manufacture the automobile back door 10 by heating the resin coating layer 3 and press bonding the glass member 2 and the resin member 5 so that the heated resin coating layer 3 is interposed between the glass member 2 and the resin member 5. In particular, by streamlining the production process by the above such hot press method, according to the method for manufacture of the present disclosure, an automobile door can be simply obtained.

The heating temperature of the resin coating layers 3 depends on the melting point or softening point of the resin to be joined with, and is preferably 100°C to 350°C. In the case of the resin coating layers 3 having a melting point, the heating temperature is preferably set at the melting point ± 5°C, while in the case of the resin coating layers 3 having a softening point, the heating temperature is preferably set at the softening point ± 15°C. The pressure at the time of the press bonding is preferably 0.005 MPa to 10 MPa.

In another embodiment, a composite laminate 1' may be formed by not the glass member 2, but the resin member 5 having one or more resin coating layers 3' disposed on it. The resin coating layers 3' can be formed on the surface of the resin member 5 by using a material similar to the above-mentioned resin coating layers 3. In this embodiment, the modified polyolefin layer 31 is preferably formed so as to be directly contiguous with the resin member 5. Therefore, in the case that there are a plurality of resin coating layers 3', it is preferable to form the modified polyolefin layer 31 on the resin member 5, then dispose other layers, for example, the curable resin layer 33, on the modified polyolefin layer 31. In this embodiment, the glass member 2 and the resin member 5 can be joined by reading the above-mentioned "glass member 2" as the "resin member 5" in this embodiment, the above-mentioned "resin member 5" as the "glass member 2" in this embodiment, and the above-mentioned "composite laminate 1" as the "composite laminate 1'".

Furthermore, in another embodiment, the above-mentioned resin coating layers 3 and 3' are respectively disposed on the glass member 2 and the resin member 5 to form the composite laminates 1 and 1' and the resin coating layers 3 of the composite laminate 1 and the resin coating layers 3' of the composite laminate 1' are fusion bonded. Due to this, the glass member 2 and the resin member 5 are joined through the resin coating layers 3 and 3'. In this embodiment, the automobile back door 10 can be manufactured by fusion bonding the resin coating layers 3 of the composite laminate 1 and the resin coating layers 3' of the composite laminate 1' using at least one type of method selected from the group consisting of hot air fusion bonding, hot plate fusion bonding, ultrasonic fusion bonding, vibration fusion bonding, electromagnetic induction fusion bonding, high frequency fusion bonding, laser beam fusion bonding, and hot press fusion bonding.

In another embodiment, at least one of the resin coating layers 3 is a layer derived from a film formed on a substrate other than the glass member 2. At least one layer of the film is the above modified polyolefin layer 31.

The film may be a single layer or may be composed of a plurality of layers. The film may be composed of a plurality of layers including the above modified polyolefin layer 31 and layers other than that modified polyolefin layer 31, and the layers other than that modified polyolefin layer 31 may be at least one layer selected from the above thermoplastic epoxy resin layer 32 and the above curable resin layer 33. In this case, the modified polyolefin layer 31 of the film is joined with the resin member 5 and the layers other than that modified polyolefin layer 31 of the film are joined with the glass member 2 having the surface treatment or not having it or the functional-group containing layers 4.

The film, for example, can be prepared by the following procedure: A film precursor composition 1 containing (1) a reaction product 1 obtained by a polyaddition reaction of a bifunctional epoxy resin and a bifunctional phenol compound in the presence of a maleic anhydride-modified polyolefin and a simultaneous reaction with the maleic anhydride in the maleic anhydride-modified polyolefin skeleton, (2) a reaction product 2 obtained by a reaction of a thermoplastic epoxy resin produced by a polyaddition reaction of a bifunctional epoxy resin and a bifunctional phenol compound and the maleic anhydride in a maleic anhydride-modified polyolefin skeleton, or (3) a mixture of a thermoplastic epoxy resin and a polyolefin, and optionally a solvent is prepared. The reaction product 1, the reaction product 2, and the mixture of the thermoplastic epoxy resin and the polyolefin are the same as those explained with reference to the modified polyolefin layer 31. The film precursor composition 1 is coated, sprayed, or extrusion laminated on a release film or a release paper having a silicone-based or other release coating so as to give a film having a thickness after drying of 1 µm to 10 mm. The coating can be performed by a bar coater, roll coater, etc. The spraying can be performed using a spray coater, etc. The extrusion lamination can be performed by using a single screw or twin screw extrusion device. After that, the assembly is allowed to stand in an environment of room temperature to 40°C to allow the solvent to evaporate and thereby form a film on the release film or release paper. After forming the film, the release film or release paper may be utilized as a carrier (support) of the film for handling of the film or the film may be peeled off from the release film or release paper to obtain a self-standing film.

The modified polyolefin layer 31 of the film may further contain constituents corresponding to structural units of the reaction product 1, the reaction product 2, or the thermoplastic epoxy resin (for example, bifunctional epoxy resins, bifunctional phenol compounds, maleic anhydride-modified polyolefins, etc.) in states completely reacted or in states partially unreacted. In the latter case, the unreacted constituents may be further reacted when joining the glass member 2 or the resin member 5 and the film (resin coating layers 3). Along with the reaction of the unreacted constituents, the joint strength of the film (resin coating layers 3) and the glass member 2 or the resin member 5 sometimes can be enhanced.

A film composed of a plurality of layers including the modified polyolefin layer 31 and layers other than that modified polyolefin layer 31 can, for example, be fabricated by the following procedure. A film precursor composition 2 including (1a) a resin composition including a thermoplastic epoxy resin, (1b) a composition including a monomer of a thermoplastic epoxy resin, or (2) a resin composition including a curable resin and, optionally a solvent is prepared. The resin composition including a thermoplastic epoxy resin and the composition including a monomer of a thermoplastic epoxy resin are the same as those explained regarding the thermoplastic epoxy resin layer 32. The resin composition including a curable resin is the same as that explained regarding the curable resin layer 33. The film precursor composition 2 is coated, sprayed, or extrusion laminated on a release film or a release paper having a silicone-based or other release coating so as to give a film having a thickness after drying of 1 µm to 10 mm. After that, this is allowed to stand in a room temperature to 40°C environment to make the solvent evaporate and is heated to promote a polyaddition reaction or a curing reaction or is irradiated with visible light or ultraviolet rays to promote a curing reaction and thereby form a thermoplastic epoxy resin layer 32 or a curable resin layer 33 on the release film or release paper. On these layers, a modified polyolefin layer 31 can be formed by the above-mentioned procedure to thereby obtain a film composed of a plurality of layers including the modified polyolefin layer 31 and layers other than that modified polyolefin layer 31.

The thermoplastic epoxy resin layer 32 or the curable resin layer 33 of the film may further contain constituents corresponding to structural units of these resins (for example, bifunctional epoxy resins, bifunctional phenol compounds, polyols, isocyanate compounds, etc.) in states completely reacted or in states partially unreacted. In the latter case, the unreacted constituents may be further reacted when joining the glass member 2 and the film. Along with the reaction of the unreacted constituents, the joint strength of the film and the glass member 2 can sometimes be enhanced.

By placing the film on the glass member 2 and pressing and heating it, it is possible to fabricate the composite laminate 1 of the glass member 2 on which the resin coating layers 3 are laminated. The glass member 2 may optionally have the above-mentioned surface treatment and/or functional-group containing layers 4. By placing the film on these and pressing and heating it, it is possible to laminate thereon the resin coating layers 3. The film composed of the plurality of layers including the modified polyolefin layer 31 and layers other than the modified polyolefin layer 31 is laminated so that the layers other than the modified polyolefin layer 31 contact the glass member 2 having the surface treatment or not having it or contact the functional-group containing layers 4.

By joining (bonding) the thus obtained composite laminate 1 and the resin member 5 to obtain an integral unit, it is possible to manufacture the automobile back door 10 (glass-polyolefin composite). The operation for joining (bonding) the composite laminate 1 and the resin member 5 can be performed by at least one method selected from the group consisting of hot air fusion bonding, hot plate fusion bonding, ultrasonic fusion bonding, vibration fusion bonding, electromagnetic induction fusion bonding, high frequency fusion bonding, laser beam fusion bonding, and hot press fusion bonding.

The resin coating layer 3 of the composite laminate 1 (derived from the film) may have formed on it a resin member 5 by injection molding (including insert molding), transfer molding, press molding, filament winding molding, hand layup molding, or other method so as to join (bond) the composite laminate 1 and the resin member 5 to form an integral unit and thereby form the automobile back door 10.

By inserting a film between the glass member 2 and the resin member 5 and using at least one method selected from the group consisting of ultrasonic fusion bonding, vibration fusion bonding, electromagnetic induction fusion bonding, high frequency fusion bonding, laser beam fusion bonding, and hot press fusion bonding to integrally join (bond) the glass member 2 and the resin member 5 through the resin coating layers 3 (derived from the film), it is possible to manufacture the automobile back door 10. In this case, the composite laminate 1 is fabricated and the automobile back door 10 is manufactured simultaneously. In the case that the glass member 2 has a surface treatment part and/or functional-group containing layers 4, the film is arranged so as to contact the surface treatment part or functional-group containing layers 4 of the glass member 2.

Several embodiments of the present invention were explained, but the present invention is not limited to the above-mentioned embodiments and can be changed in various ways within a scope not departing from the gist of the present invention. The above-mentioned embodiments are embodiments in which the rear glass is attached to the outer panel at the outer side from the vehicle compartment, but the present disclosure is not limited to such embodiments. The present disclosure additionally also includes embodiments in which the rear glass is disposed between the outer panel and inner panel. However, in embodiments in which the rear glass is disposed between the outer panel and inner panel, it is crucial that the parts of the two panels contacting the rear glass be composed of the resin members prescribed in the present disclosure.

### EXAMPLES

Working test examples relating to the present invention and comparative test examples will be shown below, but the present invention is not limited to the following working test examples.

### Manufacturing Example 1

A flask was charged with maleic anhydride-modified polypropylene (Modic^{™} ER321P manufactured by Mitsubishi Chemical Corporation): 5 g and xylene: 95 g. These were stirred while raising the temperature to 125°C to dissolve them. Next, a bifunctional epoxy resin (jER^{™}1001 manufactured by Mitsubishi Chemical Corporation: polycondensate of bisphenol A and epichlorohydrin): 1.01 g, bisphenol A: 0.24 g, and 2,4,6-tris(dimethylaminomethyl)phenol: 0.006 g were charged into the flask and stirred at 125°C for 30 minutes to obtain maleic anhydride-modified polypropylene: modified PP-1 modified by a thermoplastic epoxy resin, a bifunctional epoxy resin, and a bifunctional phenol compound.

### Manufacturing Example 2

A flask was charged with maleic anhydride-modified polypropylene (Modic^{™} ER321P manufactured by Mitsubishi Chemical Corporation): 5 g and xylene: 95 g. These were stirred while raising the temperature to 125°C to dissolve them. Next, bifunctional epoxy resin (jER^{™} 1004 manufactured by Mitsubishi Chemical Corporation): 0.49 g, bisphenol A: 0.06 g, and 2,4,6-tris(dimethylaminomethyl)phenol: 0.003 g were charged into the flask and stirred at 125°C for 30 minutes to obtain maleic anhydride-modified polypropylene: modified PP-2 modified by a thermoplastic epoxy resin, bifunctional epoxy resin, and bifunctional phenol compound.

### Manufacturing Example 3

A flask was charged with talc-containing polypropylene (TRC104N manufactured by Sun Aroma Co., Ltd.): 5 g and xylene: 95 g. These were stirred while raising the temperature to 125°C to dissolve them. Next, bifunctional epoxy resin (jER^{™} 1001 manufactured by Mitsubishi Chemical Corporation): 1.01 g, bisphenol A: 0.24 g, and 2,4,6-tris(dimethylaminomethyl)phenol: 0.006 g were charged into the flask and stirred at 125°C for 30 minutes to obtain a mixture: modified PP-3 of a thermoplastic epoxy resin (20 mass%) and polypropylene

### Manufacturing Example 4

A flask was charged with xylene: 95 g, a bifunctional epoxy resin (jER^{™} 1007 manufactured by Mitsubishi Chemical Corporation): 1.20 g, bisphenol A: 0.066 g, and 2,4,6-tris(dimethylaminomethyl)phenol: 0.003 g. These were stirred at 125°C for 30 minutes to make them react and obtain a thermoplastic epoxy resin solution. Next, the flask was charged with maleic anhydride-modified polypropylene (Modic^{™} ER321P manufactured by Mitsubishi Chemical Corporation): 5 g. This was dissolved to obtain maleic anhydride-modified polypropylene: modified PP-4 modified by a thermoplastic epoxy resin (20 mass%).

### Working Test Example 1

### Surface Treatment Step

The surface of an 18 mm×45 mm, thickness 1.2 mm glass substrate (chemically reinforced glass manufactured by Nippon Electric Glass Co., Ltd.) was degreased by acetone.

### Functional-Group Containing Layer-Forming Step

Next, the acetone degreased glass substrate was dipped for 20 minutes in a 70°C-silane coupling agent-containing solution composed of 3-aminopropyl trimethoxysilane (KBM-903: silane coupling agent, made by Shin-Etsu Silicone Co., Ltd.): 2 g made to dissolve in industrial grade ethanol 1000 g, then the glass substrate was taken out and made to dry to thereby form a functional-group containing layer on the glass substrate surface.

### Resin Coating Layer-Forming Step

Next, the modified PP-1 obtained in Manufacturing Example 1 was coated on the surface of a functional-group containing layer, the xylene was made to evaporated, and the result was held at 150°C for 30 minutes to prepare a composite laminate of a functional-group containing layer on the surface of which a thickness 30 µm modified PP-1 resin coating layer was formed.

The surface of the composite laminate on the resin coating layer side was covered with a talc-containing polypropylene resin (PP resin) (TRC104N manufactured by Sun Aroma Co. Ltd.) by injection molding by an injection molding machine (SE100V manufactured by Sumitomo Heavy Industries Ltd.; cylinder temperature 200°C, tool temperature 30°C, injection speed 50 mm/sec, peak/holding pressure 60/55[MPa/MPa]) to fabricate a test piece for a tensile test based on ISO19095 (PP resin, 10 mm×45 mm×3 mm, joint length 5 mm) (glass-polyolefin composite).

### Evaluation of Bondability

The fabricated test pieces (glass-polyolefin composites) were allowed to stand at ordinary temperature (temperature 23°C, 50% RH) for 1 day, then were subjected to tensile shear joint strength tests based on ISO19095 1-4 by a tensile test machine (Universal Tester Autograph "AG-IS" manufactured by Shimadzu Corporation; load cell 10kN, tensile speed 10 mm/min, temperature 23°C, 50%RH) and measured for joint strength. The measurement results are shown in Table 1.

### Working Test Example 2

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the same procedure was performed as in Working Test Example 1 to form a functional-group containing layer on the surface of the acetone degreased glass substrate.

### Resin Coating Layer-Forming Step: First Layer

The surface of the functional-group containing layer was coated by a thermoplastic epoxy resin composition composed of a bifunctional epoxy resin (jER^{™} 1001 manufactured by Mitsubishi Chemical Corporation): 100 g, bisphenol A: 24 g, and triethylamine: 0.4 g dissolved in acetone: 250 g so as to give a thickness after drying of 30 µm. This was allowed to stand in the air at ordinary temperature for 30 minutes to thereby cause the solvent to evaporate, then this was allowed to stand in a 150°C oven for 30 minutes to cause a polyaddition reaction, then was allowed to cool down to ordinary temperature to form a first resin coating layer (thermoplastic epoxy resin layer).

### Resin Coating Layer-Forming Step: Second Layer

Next, the surface of the thermoplastic epoxy layer was coated with the modified PP-2 obtained in Manufacturing Example 2, the xylene was made to evaporate, and the result was held at 150°C for 30 minutes to prepare a composite laminate of a thermoplastic epoxy layer on the surface of which a thickness 30 µm modified PP-2 resin coating layer (modified polyolefin layer) was formed.

The surface of the composite laminate on the second resin coating layer side was treated by the same procedure as in Working Test Example 1 to fabricate a test piece for a tensile test. The test piece was measured for joint strength by the same technique as in Working Test Example 1. The measurement results are shown in Table 1.

### Working Test Example 3

### Surface Treatment Step

An 18 mm×45 mm, thickness 1.2 mm glass substrate (chemically reinforced glass manufactured by Nippon Electric Glass Co., Ltd.) was treated by UV ozone.

### Functional-Group Containing Layer-Forming Step

Next, the UV ozone treated glass substrate was dipped for 5 minutes in a 70°C silane coupling agent-containing solution composed of 3-methacryloxypropyl trimethoxysilane (KBM-503: silane coupling agent, made by Shin-Etsu Silicone Co., Ltd.): 0.5 g made to dissolve in industrial grade ethanol 100 g, then the glass substrate was taken out and made to dry to thereby introduce functional groups derived from the silane coupling agent to the glass substrate surface. Furthermore, this was dipped for 10 minutes at 70°C in a solution composed of the bifunctional thiol compound 1,4-bis(3-mercaptobutylyloxy)butane (Karenz MT^{™} BD1 manufactured by Showa Denko K.K. KK): 0.6 g and 2,4,6-tris(dimethylaminomethyl)phenol (DMP-30): 0.05 g dissolved in toluene: 150 g, then was pulled out and dried. In this way, two functional-group containing layers were formed.

### Resin Coating Layer-Forming Step

Next, the surface of the functional-group containing layers was coated with the modified PP-3 obtained in Manufacturing Example 3, the xylene was made to evaporate, and the result was held at 150°C for 30 minutes to prepare a composite laminate of functional-group containing layers on the surface of which a thickness 30 µm modified PP-3 resin coating layer was formed.

The surface of the composite laminate at the resin coating layer side was treated by the same procedure as in Working Test Example 1 to prepare a test piece for a tensile test. This test piece was measured for joint strength by the same technique as in Working Test Example 1. The measurement results are shown in Table 1.

### Working Test Example 4

### Surface Treatment Step

An 18 mm×45 mm, thickness 1.2 mm glass substrate (chemically reinforced glass manufactured by Nippon Electric Glass Co., Ltd.) was wet blasted and formed with fine asperities on the surface of the glass substrate.

### Resin Coating Layer-Forming Step: First Layer

The roughened surface of the glass substrate was treated by the same procedure as in Working Test Example 2 to form a first resin coating layer (thermoplastic epoxy resin layer).

### Resin Coating Layer-Forming Step: Second Layer

Next, the same procedure was performed as in Working Test Example 2 to prepare a composite laminate of a thermoplastic epoxy resin layer on the surface of which a thickness 40 µm modified PP-2 resin coating layer was formed.

The surface of the composite laminate at the resin coating layer side was treated by the same procedure as in Working Test Example 1 to prepare a test piece for a tensile test. This test piece was measured for joint strength by the same technique as in Working Test Example 1. The measurement results are shown in Table 1.

### Comparative Test Example 1

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

Without providing a functional-group containing layer and resin coating layer, the acetone degreased surface of the glass substrate was covered by a resin by an injection molding operation in the same way as the Working Test Example 1. However, the PP resin did not bond with the surface of the glass substrate and a glass-polyolefin composite could not be fabricated.

### Comparative Test Example 2

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the same procedure was performed as in Working Test Example 1 to form a functional-group containing layer on the acetone degreased surface of the glass substrate.

### Resin Coating Layer-Forming Step

Next, a solution of maleic anhydride-modified polypropylene (Modic^{™} ER321P manufactured by Mitsubishi Chemical Corporation): 5 g dissolved in xylene: 95 g was coated on the surface of a functional-group containing layer, the xylene was made to evaporate, and the result was held at 150°C for 30 minutes to prepare a composite laminate of a functional-group containing layer on the surface of which a thickness 30 µm maleic anhydride modified polypropylene layer was formed.

The surface of the composite laminate at the resin coating layer side was treated by the same procedure as in Working Test Example 1 to prepare a test piece for a tensile test. This test piece was measured for joint strength by the same technique as in Working Test Example 1. The measurement results are shown in Table 1.

### [Table 1]

**Table 1**

| | | Working Test Example 1 | Working Test Example 2 | Working Test Example 3 | Working Test Example 4 | Comparative Test Example 1 | Comparative Test Example 2 |
|---|---|---|---|---|---|---|---|
| Glass substrate (thickness) | | Chemically reinforced glass (1.2 mm) | Chemically reinforced glass (1.2 mm) | Chemically reinforced glass (1.2 mm) | Chemically reinforced glass (1.2 mm) | Chemically reinforced glass (1.2 mm) | Chemically reinforced glass (1.2 mm) |
| Surface treated part | | Acetone degreased | Acetone degreased | UV ozone treatment | Wet blasted | Acetone degreased | Acetone degreased |
| Functional group-containing layer | | 3-aminopropyl trimethoxysilane | 3-aminopropyl trimethoxysilane | 3-methacryloxypropyl trimethoxysilane | - | - | 3-aminopropyl trimethoxysilane |
| | | | | 1,4-bis(3-mercaptobutyloxy)butane | | | |
| Resin coating layer | 1st | Modified PP-1 | Thermoplastic epoxy resin: jER1001/bisphenol A | Modified PP-3 | Thermoplastic epoxy resin: jER1001/bisphenol A | - | Maleic anhydride-modified polypropylene |
| | 2nd | - | Modified PP-2 | - | Modified PP-2 | - | - |
| Resin member (thickness) | | PP (3 mm) | PP (3 mm) | PP (3 mm) | PP (3 mm) | PP (3 mm) | PP (3 mm) |
| Joint strength (MPa) | | 8.2 | 8.7 | 9.1 | 7.8 | Not able be joined | 2.8 |

### Working Test Example 5

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the acetone degreased glass substrate was dipped for 20 minutes in a 70°C silane coupling agent-containing solution composed of 3-glycidoxypropyl trimethoxysilane (KBM-403: silane coupling agent, made by Shin-Etsu Silicone Co., Ltd.): 2 g made to dissolve in industrial grade ethanol 1000 g, then the glass substrate was taken out and made to dry to thereby form a functional-group containing layer on the surface of the glass substrate.

### Resin Coating Layer-Forming Step

Next, the modified PP-4 obtained in Manufacturing Example 4 was coated on the surface of a functional-group containing layer, the xylene was made to evaporate, and the result was held at 150°C for 30 minutes to prepare a composite laminate of a functional-group-containing layer on the surface of which a thickness 30 µm modified PP-4 resin coating layer was formed.

The surface of the composite laminate at the resin coating layer side was covered with a glass fiber-containing polypropylene resin (PP resin) (pp-GR40-01 F02 manufactured by Daicel Miraizu Ltd.) (joined object) by injection molding by similar conditions as in Working Test Example 1 to prepare a test piece for a tensile test. This test piece was measured for joint strength by the same technique as in Working Test Example 1. The measurement results are shown in Table 2.

### Working Test Example 6

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the same procedure was performed as in Working Test Example 5 to form a functional-group containing layer on the surface of the glass substrate after acetone degreasing.

### Resin Coating Layer-Forming Step: First Layer

Other than changing the epoxy resin to jER^{™} 1004 manufactured by Mitsubishi Chemical Corporation, the surface of the functional-group containing layer was subjected to the same operation as the Working Test Example 2 to form the first resin coating layer (thermoplastic epoxy resin layer).

### Resin Coating Layer-Forming Step: Second Layer

Next, the same procedure was performed as in Working Test Example 2 to prepare a composite laminate of a thermoplastic epoxy resin layer on the surface of which a thickness 30 µm modified PP-2 resin coating layer was formed.

The surface of the composite laminate at the second resin coating layer side was treated by the same procedure as in Working Test Example 5 to prepare a test piece for a tensile test. This test piece was measured for joint strength by the same technique as in Working Test Example 1. The measurement results are shown in Table 2.

### Working Test Example 7

### Surface Treatment Step

The same procedure was performed as in Working Test Example 4 to wet blast an 18 mm×45 mm, thickness 1.2 mm glass substrate (chemically reinforced glass manufactured by Nippon Electric Glass Co., Ltd.) and form fine asperities on the surface of the glass substrate.

### Functional-Group Containing Layer-Forming Step

Next, the same procedure as in Working Test Example 3 was performed to form a functional-group containing layer on the surface of the glass substrate.

### Resin Coating Layer-Forming Step

Next, the same procedure was performed as in Working Test Example 1 to prepare a composite laminate of a functional-group containing layer on the surface of which a thickness 30 µm modified PP-2 resin coating layer was formed.

The surface of the composite laminate at the resin coating layer side was treated by the same procedure as in Working Test Example 5 to prepare a test piece for a tensile test. This test piece was measured for joint strength by the same technique as in Working Test Example 1. The measurement results are shown in Table 2.

### Working Test Example 8

### Surface Treatment Step

The same procedure was performed as in Working Test Example 4 to wet blast an 18 mm×45 mm, thickness 1.2 mm glass substrate (chemically reinforced glass manufactured by Nippon Electric Glass Co., Ltd.) and form fine asperities on the surface of the glass substrate.

### Functional-Group Containing Layer-Forming Step

Next, the same procedure was performed as in Working Test Example 1 to form a functional-group containing layer on the surface of the glass substrate.

### Resin Coating Layer-Forming Step: First Layer

The same procedure was performed as in Working Test Example 6 to form a first resin coating layer (thermoplastic epoxy resin layer).

### Resin Coating Layer Forming Step: Second Layer

Next, the same procedure was performed as in Working Test Example 2 to prepare a composite laminate of a thermoplastic epoxy resin layer on the surface of which a thickness 40 µm modified PP-2 resin coating layer was formed.

The surface of the composite laminate at the resin coating layer side was treated by the same procedure as in Working Test Example 5 to prepare a test piece for a tensile test. This test piece was measured for joint strength by the same technique as in Working Test Example 1. The measurement results are shown in Table 2.

### Comparative Test Example 3

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

Without providing a functional-group containing layer and resin coating layer, the acetone degreased surface of the glass substrate was covered by a resin by an injection molding operation in the same way as the Working Test Example 5. However, the PP resin did not bond with the surface of the glass substrate and a glass-polyolefin composite could not be fabricated.

### Comparative Test Example 4

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the same procedure was performed as in Working Test Example 1 to form a functional-group containing layer on the surface of the acetone degreased glass substrate.

### Resin Coating Layer-Forming Step

Next, the same procedure was performed as in Comparative Test Example 2 to prepare a composite laminate of a functional-group containing layer on the surface of which a thickness 30 µm maleic anhydride modified polypropylene layer was formed.

The surface of the composite laminate at the resin coating layer side was treated by the same procedure as in Working Test Example 5 to prepare a test piece for a tensile test. This test piece was measured for joint strength by the same technique as in Working Test Example 1. The measurement results are shown in Table 2.

### [Table 2]

**Table 2**

| | | Working Test Example 5 | Working Test Example 6 | Working Test Example 7 | Working Test Example 8 | Comparative Test Example 3 | Comparative Test Example 4 |
|---|---|---|---|---|---|---|---|
| Glass substrate (thickness) | | Chemically reinforced glass (1.2 mm) | Chemically reinforced glass (1.2 mm) | Chemically reinforced glass (1.2 mm) | Chemically reinforced glass (1.2 mm) | Chemically reinforced glass (1.2 mm) | Chemically reinforced glass (1.2 mm) |
| Surface treated part | | Acetone degreased | Acetone degreased | Wet blasted | Wet blasted | Acetone degreased | Acetone degreased |
| Functional group-containing layer | | 3-glycidoxypropyl trimethoxysilane | 3-glycidoxypropyl trimethoxysilane | 3-methacryloxypropyl trimethoxysilane | 3-aminopropyl trimethoxysilane | - | 3-aminopropyl trimethoxysilane |
| | | | | 1,4-bis(3-merc ap tobut vlo x v)butane | | | |
| Resin coating layer | 1st | Modified PP-4 | Thermoplastic epoxy resin: jER1004/bisphenol A | Modified PP-1 | Thermoplastic epoxy resin: jER1004/bisphenol A | - | Maleic anhydride-modified polypropylene |
| | 2nd | - | Modified PP-2 | - | Modified PP-2 | - | - |
| Resin member (thickness) | | PP (containing glass fiber) (3 mm) | PP (containing glass fiber) (3 mm) | PP (containing glass fiber) (3 mm) | PP (containing glass fiber) (3 mm) | PP (containing glass fiber) (3 mm) | PP (containing glass fiber) (3 mm) |
| Joint strength (MPa) | | 13.1 | 13.6 | 13.9 | 13.5 | Not able be joined | 4.9 |

### Working Test Example 9

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the same procedure was performed as in Working Test Example 1 to form a functional-group containing layer on the surface of the acetone degreased glass substrate.

### Resin Coating Layer-Forming Step

Next, the same procedure was performed as in Working Test Example 5 to prepare a composite laminate of a functional-group containing layer on the surface of which a thickness 30 µm modified PP-4 resin coating layer was formed.

The surface of the composite laminate at the resin coating layer side was covered with a glass fiber-containing polypropylene resin (PP resin) (pp-GR40-01 F008 manufactured by Daicel Miraizu Ltd.) (joined object) by injection molding by similar conditions as in Working Test Example 1 to prepare a test piece for a tensile test. This test piece was measured for joint strength by the same technique as in Working Test Example 1. The measurement results are shown in Table 3.

### Working Test Example 10

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the same procedure was performed as in Working Test Example 1 to form a functional-group containing layer on the surface of the acetone degreased glass substrate.

### Resin Coating Layer-Forming Step: First Layer

Other than changing the epoxy resin to jER^{™} 1007 manufactured by Mitsubishi Chemical Corporation, the surface of the functional-group containing layer was subjected to the same operation as the Working Test Example 2 to form the first resin coating layer (thermoplastic epoxy resin layer).

### Resin Coating Layer-Forming Step: Second Layer

Next, the same procedure was performed as in Working Test Example 2 to prepare a composite laminate of a thermoplastic epoxy resin layer on the surface of which a thickness 30 µm modified PP-2 resin coating layer was formed.

The surface of the composite laminate at the second resin coating layer side was treated by the same procedure as in Working Test Example 9 to prepare a test piece for a tensile test. This test piece was measured for joint strength by the same technique as in Working Test Example 1. The measurement results are shown in Table 3.

### Working Test Example 11

### Surface Treatment Step

The same procedure was performed as in Working Test Example 1 to degrease by acetone the surface of a glass substrate (18 mm×45 mm, thickness 1.2 mm chemically reinforced glass manufactured by Nippon Electric Glass Co., Ltd.)

### Functional-Group Containing Layer-Forming Step

Next, the same procedure was performed as in Working Test Example 1 to introduce functional groups derived from a silane coupling agent to the surface of the acetone degreased glass substrate. Furthermore, the glass substrate was dipped for 5 minutes at 70°C in a solution composed of 2-isocyanatoethyl methacrylate (Karenz MOI^{™} manufactured by Showa Denko K.K.): 1.2 g and 2,4,6-tris(dimethylaminomethyl)phenol (DMP-30): 0.05 g dissolved in toluene: 150 g, then pulled out and dried. By doing this, a functional-group containing layer having chemically bondable functional groups stretched in three-dimensional directions was formed.

### Resin Coating Layer-Forming Step

Next, the same procedure was performed as in Working Test Example 1 to prepare a composite laminate of a functional-group containing layer on the surface of which a thickness 30 µm modified PP-1 resin coating layer was formed.

The surface of the composite laminate at the resin coating layer side was treated by the same procedure as in Working Test Example 9 to prepare a test piece for a tensile test. This test piece was measured for joint strength by the same technique as in Working Test Example 1. The measurement results are shown in Table 3.

### Working Test Example 12

### Surface Treatment Step

The same procedure was performed as in Working Test Example 4 to wet blast an 18 mm×45 mm, thickness 1.2 mm glass substrate (chemically reinforced glass manufactured by Nippon Electric Glass Co., Ltd.) and form fine asperities on the surface of the glass substrate.

### Functional-Group Containing Layer-Forming Step

Next, the same procedure was performed as in Working Test Example 1 to form a functional-group containing layer on the surface of the glass substrate

### Resin Coating Layer-Forming Step: First Layer

The surface of the functional-group containing layer was coated by a thermoplastic epoxy resin composition composed of an epoxy resin (jER^{™} 1007 manufactured by Mitsubishi Chemical Corporation): 100 g, bisphenol A: 5.6 g, and triethylamine: 0.4 g dissolved in acetone: 196 g by spraying so as to give a thickness after drying of 30 µm. This was allowed to stand in the air at ordinary temperature for 30 minutes to thereby cause the solvent to evaporate, then this was allowed to stand in a 150°C oven for 30 minutes to cause a polyaddition reaction, then was allowed to cool down to ordinary temperature to form a first resin coating layer (thermoplastic epoxy resin layer).

### Resin Coating Layer-Forming Step: Second Layer

Next, the same procedure was performed as in Working Test Example 2 to prepare a composite laminate of a thermoplastic epoxy resin layer on the surface of which a thickness 40 µm modified PP-2 resin coating layer was formed.

The surface of the composite laminate at the resin coating layer side was treated by the same procedure as in Working Test Example 9 to prepare a test piece for a tensile test. This test piece was measured for joint strength by the same technique as in Working Test Example 1. The measurement results are shown in Table 3.

### [Table 3]

**Table 3**

| | | Working Test Example 9 | Working Test Example 10 | Working Test Example 11 | Working Test Example 12 |
|---|---|---|---|---|---|
| Glass substrate (thickness) | | Chemically reinforced glass (1.2 mm) | Chemically reinforced glass (1.2 mm) | Chemically reinforced glass (1.2 mm) | Chemically reinforced glass (1.2 mm) |
| Surface treated part | | Acetone degreased | Acetone degreased | Acetone degreased | Wet blasted |
| Functional group-containing layer | | 3-aminopropyl trimethoxysilane | 3-aminopropyl trimethoxysilane | 3-aminopropyl trimethoxysilane | 3-aminopropyl trimethoxysilane |
| | | | | 2-isocyanate ethyl methacrylate | |
| Resin coating layer | 1st | Modified PP-4 | Thermoplastic epoxy resin: jER1007/bisphenol A | Modified PP-1 | Thermoplastic epoxy resin: jER1007/bisphenol A |
| | 2nd | - | Modified PP-2 | - | Modified PP-2 |
| Resin member (thickness) | | PP (containing carbon fiber) (3 mm) | PP (containing carbon fiber) (3 mm) | PP (containing carbon fiber) (3 mm) | PP (containing carbon fiber) (3 mm) |
| Joint strength (MPa) | | 18.1 | 19.1 | 18.8 | 19.4 |

As will be understood from the results of evaluation of Tables 1 to 3, the glass-polyolefin composites of the Working Test Examples 1 to 12 all had high joint strengths.

### INDUSTRIAL APPLICABILITY

The present invention can be applied to automobile doors and methods for manufacturing the same.

### REFERENCE SIGNS LIST

1. composite laminate
2. glass member
21. surface treatment part
3. resin coating layer
31. modified polyolefin layer
32. thermoplastic epoxy resin layer
33. curable resin layer
4. functional-group containing layer
5. resin member (polyolefin)
10. automobile back door (glass-polyolefin composite)
12. outer panel
12a. first panel part
12b. second panel part
12c. third panel part
12d. tail lights
12e. fourth panel part
12f. fifth panel part
14. rear glass
C. cavity part
F1, F2. flange parts
X. encircled part

## Claims

1. An automobile door comprising a glass member, a frame including a resin member joined with the glass member, and one or more resin coating layers disposed on at least one of the glass member and the resin member, wherein,
the glass member is a window glass,
the resin member includes at least one panel for fastening the window glass,
the glass member and the resin member are joined through the one or more resin coating layers,
among the one or more resin coating layers, a layer contiguous with the glass member is a modified polyolefin layer formed from a resin composition including a polyolefin, the modified polyolefin layer being at least one type selected from the group consisting of a layer including a reaction product 1 of a maleic anhydride-modified polyolefin, a bifunctional epoxy resin, and a bifunctional phenol compound, a layer including a reaction product 2 of a maleic anhydride-modified polyolefin and a thermoplastic epoxy resin, and a layer including a mixture of a polyolefin and a thermoplastic epoxy resin.

2. The automobile door according to claim 1, wherein the reaction product 1 is obtained by a polyaddition reaction of a bifunctional epoxy resin and a bifunctional phenol compound in a solution containing a maleic anhydride-modified polyolefin.

3. The automobile door according to claim 1, wherein the reaction product 2 is obtained by a reaction of a thermoplastic epoxy resin produced by a polyaddition reaction of a bifunctional epoxy resin and a bifunctional phenol compound, and a maleic anhydride-modified polyolefin.

4. The automobile door according to claim 1, wherein the mixture is a mixture of polypropylene and a thermoplastic epoxy resin.

5. The automobile door according to any one of claims 1 to 4, wherein the one or more resin coating layers are a plurality of layers including the modified polyolefin layer and at least one layer other than the modified polyolefin layer, at least one layer of the layers other than the modified polyolefin layer being at least one type selected from the group consisting of a thermoplastic epoxy resin layer formed from a resin composition including a thermoplastic epoxy resin and a curable resin layer formed from a resin composition including a curable resin.

6. The automobile door according to claim 5, wherein the curable resin is at least one resin selected from the group consisting of a urethane resin, an epoxy resin, a vinyl ester resin, and an unsaturated polyester resin.

7. The automobile door according to any one of claims 1 to 6, wherein the automobile door has, between the glass member and the one or more resin coating layers, a functional-group containing layer disposed contiguous with the glass member and the one or more resin coating layers,
the functional-group containing layer containing at least one functional group selected from the group consisting of the following (1) to (7):
(1) at least one functional group derived from a silane coupling agent and selected from the group consisting of an epoxy group, an amino group, a (meth)acryloyl group, and a mercapto group,
(2) a functional group produced by a reaction of at least one compound selected from the group consisting of an epoxy compound and a thiol compound with an amino group derived from a silane coupling agent,
(3) a functional group produced by a reaction of at least one compound selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
(4) a functional group produced by a reaction of a thiol compound with a (meth)acryloyl group derived from a silane coupling agent,
(5) a functional group produced by a reaction of at least one compound selected from the group consisting of a compound having an amino group and a (meth)acryloyl group, an amino compound, and a thiol compound with an epoxy group derived from a silane coupling agent,
(6) an isocyanato group derived from an isocyanate compound, and
(7) a mercapto group derived from a thiol compound.

8. The automobile door according to any one of claims 1 to 7, wherein a surface of the glass member contacting the one or more resin coating layers is treated by at least one surface treatment selected from the group consisting of degreasing, UV ozone treatment, blasting, polishing, plasma treatment, and corona discharge.

9. The automobile door according to any one of claims 1 to 8, wherein
the glass member is a rear glass, and
the resin member is at least one of an outer panel and an inner panel.

10. A method for manufacturing an automobile back door according to any one of claims 1 to 9, the method comprising heating the at least one resin coating layer and pressing together the glass member and the resin member so that the heated at least one resin coating layer is interposed between the glass member and the resin member to thereby join the glass member and the resin member.

## Patentansprüche

1. Autotür, umfassend ein Glaselement, einen Rahmen, der ein mit dem Glaselement verbundenes Harzelement aufweist, und eine oder mehrere Harzbeschichtungsschichten, die auf mindestens einem des Glaselements und des Harzelements angeordnet ist/sind, wobei
das Glaselement ein Fensterglas ist,
das Harzelement mindestens eine Platte/ein Feld zum Befestigen des Fensterglases beinhaltet,
das Glaselement und das Harzelement durch die eine oder mehreren Harzbeschichtungsschichten verbunden sind,
von der einen oder mehreren Harzbeschichtungsschichten eine an das Glaselement angrenzende Schicht eine modifizierte Polyolefinschicht ist, die aus einer ein Polyolefin enthaltenden Harzzusammensetzung gebildet ist, wobei die modifizierte Polyolefinschicht mindestens ein Typus ist, ausgewählt aus der Gruppe bestehend aus einer Schicht, die ein Reaktionsprodukt 1 eines Maleinsäureanhydrid-modifizierten Polyolefins, eines bifunktionalen Epoxidharzes und einer bifunktionalen Phenolverbindung enthält, einer Schicht, die ein Reaktionsprodukt 2 eines Maleinsäureanhydrid-modifizierten Polyolefins und eines thermoplastisches Epoxidharzes enthält, und einer Schicht, die ein Gemisch aus einem Polyolefin und einem thermoplastischen Epoxidharz enthält.

2. Autotür gemäß Anspruch 1, wobei das Reaktionsprodukt 1 durch eine Polyadditionsreaktion eines bifunktionalen Epoxidharzes und einer bifunktionalen Phenolverbindung in einer ein Maleinsäureanhydrid-modifiziertes Polyolefin enthaltenden Lösung erhalten wird.

3. Autotür gemäß Anspruch 1, wobei das Reaktionsprodukt 2 durch eine Reaktion eines thermoplastischen Epoxidharzes, das durch eine Polyadditionsreaktion eines bifunktionalen Epoxidharzes mit einer bifunktionalen Phenolverbindung erhalten wird, und eines Maleinsäureanhydrid-modifizierten Polyolefins gewonnen wird.

4. Autotür gemäß Anspruch 1, wobei das Gemisch ein Gemisch aus Polypropylen und einem thermoplastischen Epoxidharz ist.

5. Autotür gemäß einem der Ansprüche 1 bis 4, wobei die eine oder mehrere Harzbeschichtungsschichten eine Vielzahl von Schichten ist/sind, einschließlich der modifizierten Polyolefinschicht und mindestens einer anderen Schicht als der modifizierten Polyolefinschicht, wobei die mindestens eine Schicht der anderen Schichten als der modifizierten Polyolefinschicht mindestens ein Typus ist, ausgewählt aus der Gruppe bestehend aus einer thermoplastischen Epoxidharzschicht, die aus einer Harzzusammensetzung, die ein thermoplastisches Epoxidharz enthält, gebildet ist, und einer härtbaren Harzschicht, die aus einer ein härtbares Harz enthaltenden Harzzusammensetzung gebildet ist.

6. Autotür gemäß Anspruch 5, wobei das härtbare Harz mindestens ein Harz ist, ausgewählt aus der Gruppe bestehend aus einem Urethanharz, einem Epoxidharz, einem Vinylesterharz und einem ungesättigten Polyesterharz.

7. Autotür gemäß einem der Ansprüche 1 bis 6, wobei die Autotür zwischen dem Glaselement und der einen oder mehreren Harzbeschichtungsschichten eine funktionale Gruppe-enthaltende Schicht aufweist, die an das Glaselement und die eine oder mehrere Harzbeschichtungsschichten angrenzt,
wobei die funktionale Gruppe-enthaltende Schicht mindestens eine funktionale Gruppe enthält, ausgewählt aus der Gruppe bestehend aus den folgenden (1) bis (7):
(1) mindestens eine funktionale Gruppe, die von einem Silan-Kupplungsmittel abgeleitet ist und aus der Gruppe ausgewählt ist, bestehend aus einer Epoxidgruppe, einer Aminogruppe, einer (Meth)acryloylgruppe und einer Mercaptogruppe,
(2) eine funktionale Gruppe, hergestellt durch eine Reaktion von mindestens einer Verbindung, ausgewählt aus der Gruppe bestehend aus einer Epoxidverbindung und einer Thiolverbindung, mit einer von einem Silan-Kupplungsmittel stammenden Aminogruppe,
(3) eine funktionale Gruppe, hergestellt durch eine Reaktion von mindestens einer Verbindung, ausgewählt aus der Gruppe, bestehend aus einer Epoxidverbindung, einer Aminoverbindung, einer Isocyanatverbindung, einer Verbindung mit einer (Meth)acryloylgruppe und einer Epoxidgruppe und einer Verbindung mit einer (Meth)acryloylgruppe und einer Aminogruppe, mit einer von einem Silan-Kupplungsmittel abgeleiteten Mercaptogruppe,
(4) eine funktionale Gruppe, hergestellt durch eine Reaktion einer Thiolverbindung mit einer (Meth)acryloylgruppe, die von einem Silan-Kupplungsmittel stammt,
(5) eine funktionale Gruppe, hergestellt durch eine Reaktion von mindestens einer Verbindung, ausgewählt aus der Gruppe bestehend aus einer Verbindung, die eine Aminogruppe und eine (Meth)acryloylgruppe aufweist, einer Aminoverbindung und einer Thiolverbindung, mit einer von einem Silan-Kupplungsmittel stammenden Epoxidgruppe,
(6) eine Isocyanatgruppe, die von einer Isocyanatverbindung stammt, und
(7) eine Mercaptogruppe, die von einer Thiolverbindung stammt.

8. Autotür gemäß einer der Ansprüche 1 bis 7, wobei eine Oberfläche des Glaselements in Kontakt mit der einen oder mehreren Harzbeschichtungsschichten mit mindestens einer Oberflächenbehandlung behandelt wird, ausgewählt aus der Gruppe bestehend aus Entfettung, UV-Ozonbehandlung, Strahlen, Polieren, Plasmabehandlung und Coronaentladung.

9. Autotür gemäß einer der Ansprüche 1 bis 8, wobei
das Glaselement ein Heckseitenglas ist, und
das Harzelement mindestens eines von einer äußeren Platte/einem äußeren Feld oder einer inneren Platte/einem inneren Feld ist.

10. Verfahren zur Herstellung einer Autoheckklappe gemäß einem der Ansprüche 1 bis 9, wobei das Verfahren das Erhitzen der mindestens einen Harzbeschichtungsschicht und das Zusammenpressen des Glaselements und des Harzelements derart, dass sich die erhitzte mindestens eine Harzbeschichtungsschicht zwischen dem Glaselement und dem Harzelement befindet, umfasst, um das Glaselement und das Harzelement zu verbinden.

## Revendications

1. Porte d'automobile comprenant un élément en verre, un cadre comportant un élément en résine relié à l'élément en verre, et une ou plusieurs couches de revêtement en résine disposées sur au moins l'un de l'élément en verre et de l'élément en résine, dans laquelle,
l'élément en verre est un verre de fenêtre,
l'élément en résine comporte au moins un panneau pour fixer le verre de fenêtre,
l'élément en verre et l'élément en résine sont reliés par l'intermédiaire des une ou plusieurs couches de revêtement en résine,
parmi les une ou plusieurs couches de revêtement en résine, une couche contiguë à l'élément en verre est une couche de polyoléfine modifiée formée à partir d'une composition de résine comportant une polyoléfine, la couche de polyoléfine modifiée étant au moins un type choisi dans le groupe constitué d'une couche comportant un produit réactionnel 1 d'une polyoléfine modifiée par un anhydride maléique, d'une résine époxy bifonctionnelle et d'un composé phénol bifonctionnel, d'une couche comportant un produit réactionnel 2 d'une polyoléfine modifiée par un anhydride maléique et d'une résine époxy thermoplastique, et d'une couche comportant un mélange d'une polyoléfine et d'une résine époxy thermoplastique.

2. Porte d'automobile selon la revendication 1, dans laquelle le produit réactionnel 1 est obtenu par une réaction de polyaddition d'une résine époxy bifonctionnelle et d'un composé phénol bifonctionnel dans une solution contenant une polyoléfine modifiée par un anhydride maléique.

3. Porte d'automobile selon la revendication 1, dans laquelle le produit réactionnel 2 est obtenu par une réaction d'une résine époxy thermoplastique produite par une réaction de polyaddition d'une résine époxy bifonctionnelle et d'un composé phénol bifonctionnel, et d'une polyoléfine modifiée par un anhydride maléique.

4. Porte d'automobile selon la revendication 1, dans laquelle le mélange est un mélange de polypropylène et d'une résine époxy thermoplastique.

5. Porte d'automobile selon l'une quelconque des revendications 1 à 4, dans laquelle les une ou plusieurs couches de revêtement en résine sont une pluralité de couches comportant la couche de polyoléfine modifiée et au moins une couche autre que la couche de polyoléfine modifiée, au moins une couche des couches autres que la couche de polyoléfine modifiée étant au moins un type choisi dans le groupe constitué d'une couche de résine époxy thermoplastique formée à partir d'une composition de résine comportant une résine époxy thermoplastique et d'une couche de résine durcissable formée à partir d'une composition de résine comportant une résine durcissable.

6. Porte d'automobile selon la revendication 5, dans laquelle la résine durcissable est au moins une résine choisie dans le groupe constitué d'une résine d'uréthane, d'une résine époxy, d'une résine d'ester de vinyle et d'une résine de polyester insaturé.

7. Porte d'automobile selon l'une quelconque des revendications 1 à 6, dans laquelle la porte d'automobile a, entre l'élément en verre et les une ou plusieurs couches de revêtement en résine, une couche contenant des groupes fonctionnels disposée contiguë à l'élément en verre et aux une ou plusieurs couches de revêtement en résine,
la couche contenant des groupes fonctionnels contenant au moins un groupe fonctionnel choisi dans le groupe constitué des (1) à (7) suivants :
(1) au moins un groupe fonctionnel dérivé d'un agent de couplage au silane et choisi dans le groupe constitué d'un groupe époxy, d'un groupe amino, d'un groupe (méth)acryloyle et d'un groupe mercapto,
(2) un groupe fonctionnel produit par une réaction d'au moins un composé choisi dans le groupe constitué d'un composé époxy et d'un composé thiol avec un groupe amino dérivé d'un agent de couplage au silane,
(3) un groupe fonctionnel produit par une réaction d'au moins un composé choisi dans le groupe constitué d'un composé époxy, d'un composé amino, d'un composé isocyanate, d'un composé ayant un groupe (méth)acryloyle et un groupe époxy, et d'un composé ayant un groupe (méth)acryloyle et un groupe amino avec un groupe mercapto dérivé d'un agent de couplage au silane,
(4) un groupe fonctionnel produit par une réaction d'un composé thiol avec un groupe (méth)acryloyle dérivé d'un agent de couplage au silane,
(5) un groupe fonctionnel produit par une réaction d'au moins un composé choisi dans le groupe constitué d'un composé ayant un groupe amino et un groupe (méth)acryloyle, d'un composé amino, et d'un composé thiol avec un groupe époxy dérivé d'un agent de couplage au silane,
(6) un groupe isocyanato dérivé d'un composé isocyanate, et
(7) un groupe mercapto dérivé d'un composé thiol.

8. Porte d'automobile selon l'une quelconque des revendications 1 à 7, dans laquelle une surface de l'élément en verre en contact avec les une ou plusieurs couches de revêtement en résine est traitée par au moins un traitement de surface choisi dans le groupe constitué du dégraissage, du traitement à l'ozone UV, du sablage, du polissage, du traitement au plasma et de la décharge corona.

9. Porte d'automobile selon l'une quelconque des revendications 1 à 8, dans laquelle
l'élément en verre est un verre arrière, et
l'élément en résine est au moins l'un d'un panneau externe et d'un panneau interne.

10. Procédé de fabrication d'une porte arrière d'automobile selon l'une quelconque des revendications 1 à 9, le procédé comprenant le chauffage de l'au moins une couche de revêtement en résine et le pressage ensemble de l'élément en verre et de l'élément en résine de sorte que l'au moins une couche de revêtement en résine chauffée est interposée entre l'élément en verre et l'élément en résine pour ainsi relier l'élément en verre et l'élément en résine.
